# EUROPEAN PATENT SPECIFICATION

(11) **EP 2 090 811 B1**
(45) Date of publication and mention of the grant of the patent: **05.10.2011**
(21) Application number: 09152546.9
(22) Date of filing: 11.02.2009
(51) Int. Cl.: F16H 63/30, F16H 63/22, F16H 63/28

(54) **Gear noise preventing device for manual transmission**
Schaltgeräuschverhinderungsvorrichtung für ein Handschaltgetriebe
Dispositif de prévention du bruit d'engagement d'engrenage pour transmission manuelle

(30) Priority: 12.02.2008 JP 2008030127
(43) Date of publication of application: 19.08.2009
(73) Proprietor: Toyota Jidosha Kabushiki Kaisha, Toyota-shi, Aichi-ken, 471-8571 (JP)
(72) Inventor: Takeuchi, Hiroaki, Toyota-shi Aichi 471-8571 (JP); Fujii, Akihiro, Toyota-shi Aichi 471-8571 (JP); Nishimura, Shigeto, Toyota-shi Aichi 471-8571 (JP)
(74) Representative: TBK

(56) References cited:
- EP-A- 0 300 843
- JP-A- 58 170 952
- JP-A- 59 194 135
- JP-U- 4 062 461

## Description

The invention relates to a manual transmission comprising a gear noise preventing device having the features of the preamble of claim 1.

In the related art, many vehicle manual transmissions generally have synchronizers on forward gears but no synchronizers on reverse gear. This is because of the following reason. Normally, it is assumed that reverse gear shift operation, by which the gear shifts from forward gear into reverse gear, is performed when a clutch is released and the vehicle is stopped. Thus, a reverse drive gear provided on an input shaft of a transmission mechanism and a, reverse driven gear provided on a counter shaft (also called output shaft in the case of an FF vehicle) both are stopped in rotation, and then a reverse idler gear that is also stopped in rotation meshes with these gears.

However, actually, even when the clutch is released, the input shaft may still be rotated by its inertia. Particularly, when reverse gear shift operation is performed immediately after the vehicle stops from a forward running state, it is highly likely that the above situation occurs. Under the above situation, when the reverse idler gear is axially moved to mesh with the reverse drive gear that integrally rotates with the input shaft, the reverse idler gear, which is not rotating, meshes with the rotating reverse drive gear. Thus, the reverse idler gear does not smoothly mesh with the reverse drive gear and, therefore, noise, so-called "reverse shift gear noise", may occur, making the driver feel uncomfortable.

To prevent the occurrence of the reverse gear shift noise, various gear noise preventing devices have been suggested in the related art. These gear noise preventing devices include a device in which a gear noise preventing function works at the time of shift operation of a shift lever after select operation of the shift lever, the gears start meshing with each other immediately after the gear noise preventing function works. Thus, the duration during which the gear noise preventing function works is extremely short, and there is a possibility that the performance for preventing gear noise cannot be sufficiently achieved.

Then, as described in JP-U-5-1059 and JP-A-8-4898, a gear noise preventing device has been suggested in which a gear noise preventing function works at the time of the select operation of the shift lever.

JP-U-5-1059 describes a structure that a cam plate having a cam groove is fixedly connected to a shift select shaft (in JP-U-5-1059, it is referred to as "control rod"), while a pin extends from the side surface of a fork shaft (in JP-U-5-1059, it is referred to as "shift rod") for achieving forward gears and a reverse gear toward the cam plate of the shift select shaft and then the distal end of the pin is slidably engaged with the cam groove.

With this gear noise preventing device, at the time when the select operation is performed toward the reverse gear (at the time when the shift select shaft is rotated), the fork shaft slightly slides toward fifth gear to activate a fifth gear synchronizer. By so doing, the input shaft, which is rotating by inertia, is coupled to the output shaft that stops in rotation at the same time when the vehicle stops and, as a result, rotation of the input shaft is decreased or stopped. This prevents the reverse shift gear noise.

On the other hand, in JP-A-8-4898, a shift lever engagement groove of a fifth and reverse fork shaft is axially offset from shift lever engagement grooves of the other forward-gear fork shafts (a first and second fork shaft and a third and fourth fork shaft). Then, when the select operation is performed toward reverse gear, the shift lever is engaged with the shift lever engagement groove of the fifth and reverse fork shaft to cause the fork shaft to slide by the above offset amount. Thus, a fifth gear synchronizer is activated and, as a result, the reverse shift gear noise is prevented.

However, in any of JP-U-5-1059 and JP-A-8-4898, driver's operating force applied to the shift lever is transmitted to the shift select shaft, and the operating force applied to the shift select shaft in a select direction directly acts on the fork shaft that provides a gear noise preventing function (hereinafter, referred to as pre-balk fork shaft). Thus, the shift select shaft directly receives a load (pre-balk load) when the gear noise preventing device is activated. The shift select shaft is supported movably in the select direction (for example, rotational direction) and a shift direction (for example, axial direction), so it is difficult for the shift select shaft to sufficiently receive the pre-balk load. That is, the pre-balk load may possibly cause the shift select shaft to move and, therefore, it is difficult that the pre-balk load is received by the shift select shaft. For this reason, it may be impossible to sufficiently obtain a stroke of the pre-balk fork shaft for causing the gear noise preventing function to work (stroke for activating the synchronizer). Therefore, there is room for improvement in terms of reliability of the gear noise preventing mechanism.

It is conceivable that a mechanism that uses a spring, or the like, for receiving a pre-balk load at the time when the reverse shift gear noise preventing mechanism works is provided to thereby solve the above problem. However, in this case, if the mechanism works similarly both at the time of a reverse gear release operation and at the time of a reverse gear shift operation, the urging force of the spring, or the like, is also applied at the time of the reverse gear release operation. Thus, the operating load of the shift lever may undesirably increase. In addition, when the above mechanism is provided, there is a possibility that the stroke of the pre-balk fork shaft may excessively increase. In this case, the sleeve and gear piece (transmission gear) of the synchronizer may undesirably mesh with each other. Thus, when the mechanism that uses the spring, or the like, for receiving a pre-balk load is provided, there is room for improvement in terms of operability of the gear noise preventing mechanism.

JP 59 194135 A discloses a generic manual transmission comprising a gear noise preventing device having the features of the preamble of claim 1.

It is the object of the invention to provided a manual transmission comprising a gear noise preventing device which is able to improve reliability and operability of the manual transmission.

The object of the invention is achieved with a manual transmission comprising a gear noise preventing device having the features of claim 1.

Further advantageous developments of the invention are subject-matter of the dependent claims.

According to the gear noise preventing device of the invention, the rotational force of the shift select shaft is transmitted from the first head member through the intermediate head member to the pre-balk head member, and, when power is transmitted from the intermediate head member to the pre-balk head member, the rotational force is converted into a linear moving force in the synchronizer activating direction. Then, the pre-balk load is applied to the intermediate head member in the synchronizer activating direction; however, the shift select shaft applies the urging force to the intermediate head member in the rotational direction, so the pre-balk load does not directly act on the shift select shaft. That is, the pre-balk load may be sufficiently received by restricting axial movement of the intermediate head member. Thus, it is possible to ensure a large stroke of the pre-balk fork shaft to cause the gear noise preventing function to work (stroke for activating the third synchronizer). As a result, it is possible to improve reliability of the gear noise preventing function. Furthermore, at the time of the select operation to the reverse select position, by finally pressing the pre-balk head member with the flat surface of the intermediate head member, it is possible to accurately regulate the stroke for activating the synchronizer. Thus, when the gear noise preventing device works, it is possible to avoid meshing of the sleeve and gear piece of the synchronizer and, therefore, it is possible to improve reliability of the gear noise preventing function.

In addition, because the intermediate head member has the two-step inclined surfaces, even when there is a manufacturing tolerance, a positioning error, or the like, one of the inclined surfaces is able to reliably press the pre-balk head member at the time when the intermediate head member rotates, while an increase in operating load of the shift lever may be suppressed.

Then, angles of the two inclined surfaces may be set so that, when the rotational force is applied from the at least one intermediate head member to the pre-balk head member to axially move the forward-gear fork shaft, the synchronizer is not activated at the time when the boundary between the two inclined surfaces contacts the pre-balk head member. In addition, one of the two inclined surfaces may be formed continuously to the flat surface and inclined at an angle smaller than 45 degrees with respect to the flat surface.

With the above structure, the inclination angle of the other one of the two inclined surfaces with respect to the flat surface is relatively large. Thus, even when there is a manufacturing tolerance, a positioning error, or the like, the other one of the two inclined surfaces is able to reliably press the pre-balk head member at the time when the intermediate head member rotates. Here, when the pre-balk head member is in contact with the other one of the two inclined surfaces, no pre-balk load is generated. Thus, even when the inclination angle of the other one of the two inclined surfaces is relatively large, the influence on the operating load of the shift lever may be suppressed to a lesser degree.

In addition, because the inclination angle of one of the two inclined surfaces with respect to the flat surface is relatively small, an increase in operating load of the shift lever may be suppressed. While the one of the two inclined surfaces is in contact with the pre-balk head member, the synchronizer is activated and the pre-balk load is generated. Thus, when one of the two inclined surfaces is not provided (when only the other one of the two inclined surfaces is provided), the pre-balk load largely acts on the intermediate head member in the rotational direction and, as a result, the operating load of the shift lever increases. With the above described structure, because the inclination angle of the one of the two inclined surfaces is smaller than the inclination angle of the other one of the two inclined surfaces, the component of the pre-balk load in the rotational direction, which acts on the intermediate head member, may be suppressed to a lesser degree, and the operating load of the shift lever may be reduced.

In addition, a member having a low frictional coefficient may be provided adjacent to the at least one intermediate head member and arranged on a rear side of the at least one intermediate head member in the direction in which the forward-gear fork shaft is moved by the rotational force applied from the at least one intermediate head member. Here, the member having a low frictional coefficient may be, for example, one of a washer or a thrust bearing, which is made of polytetrafluoroethylene (PTFE).

In this way, when the intermediate head member is rotated, sliding resistance is reduced by the member having a low frictional coefficient. Thus, even when the pre-balk load acts on the intermediate head member, the intermediate head member may be smoothly rotated and, as a result, the operating load of the shift lever may be reduced.

The features, advantages, and technical and industrial significance of this invention will be described in the following detailed description of example embodiments of the invention with reference to the accompanying drawings, in which like numerals denote like elements, and wherein:
FIG. 1 is a cross-sectional view that shows the gear layout of a manual transmission according to an embodiment, which is an example of the invention;
FIG 2 is a view that schematically shows the shift pattern of a six-speed manual transmission according to the embodiment;
FIG. 3 is a cross-sectional view , of forward-gear engaging portions and their surrounding portions in a select and shift mechanism of the six-speed manual transmission as viewed in an axial direction of a shift select shaft;
FIG. 4 is a cross-sectional view of an engaged portion between a fifth and sixth fork shaft and a third synchromesh mechanism in the select and shift mechanism;
FIG. 5 is a cross-sectional view of a gear noise preventing device, shift forks and their surrounding portions in the select and shift mechanism as viewed in the axial direction of the shift select shaft;
FIG. 6 is a view that shows the positional relationship in the axial direction among a first head of the shift select shaft, a second head of a third and fourth fork shaft, and a third head of the fifth and sixth fork shaft in the select and shift mechanism;
FIG. 7 is a cross-sectional view that shows an urging mechanism provided on the third and fourth fork shaft in the select and shift mechanism;
FIG. 8A to FIG. 8C show a state where a reverse gear shift operation is not performed in the select and shift mechanism, in which FIG. 8A is a view of the gear noise preventing device as viewed in the axial direction of the shift select shaft, FIG. 8B is a view that shows the positional relationship between the second head and the third head as viewed in the arrow B direction in FIG. 8A, and FIG. 8C is a view that shows the positional relationship between an arm portion of a shift inner lever and heads;
FIG. 9 is an enlarged view of a pre-balk pressing pawl of the second head as viewed in the arrow B direction in FIG 8A;
FIG. 10A to FIG 10C are views corresponding to FIG. 8A to FIG. 8C at the initial stage of the reverse gear shift operation in the select and shift mechanism;
FIG. 11A to FIG .11C are views corresponding to FIG. 8A to FIG. 8C at the time when the rotation amount of the first head is increased from the state shown in FIG. 10A to FIG. 10C;
FIG. 12A to FIG. 12C are views corresponding to FIG 8A to FIG. 8C at the time when the rotation amount of the first head is further increased from the state shown in FIG. 11A to FIG. 11C;
FIG. 13A to FIG. 13C are views corresponding to FIG. 8A to FIG. 8C at the time when a shift operation is performed toward a reverse gear position; and
FIG. 14A to FIG 14C are views corresponding to FIG. 8A to FIG. 8C at the time when a reverse gear release operation is initiated.

Hereinafter, an embodiment of the invention will be described with reference to the accompanying drawings. The present embodiment will be described in the case where the invention is applied to a six-forward-speed and one-reverse-speed synchromesh manual transmission mounted on a front-engine front-drive (FF) vehicle.

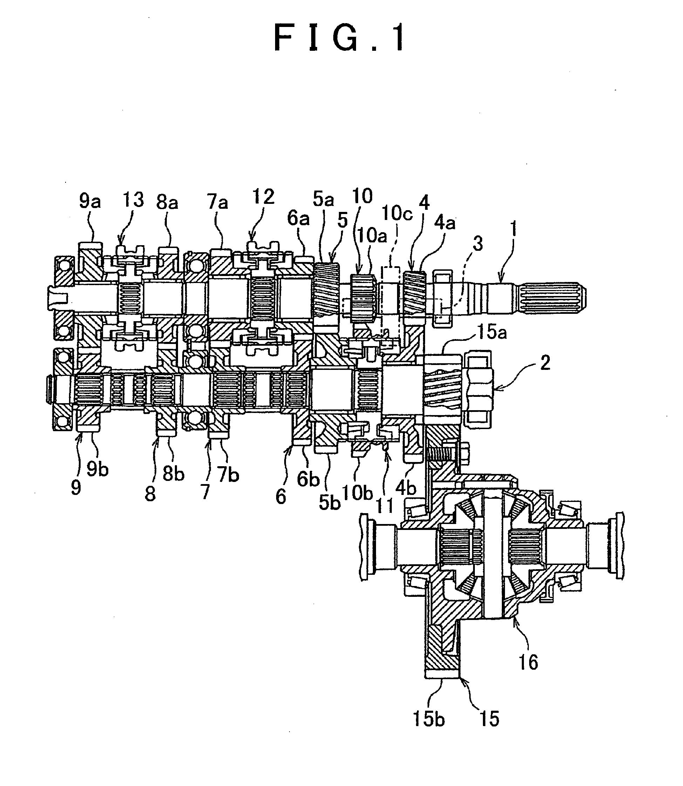

FIG. 1 is a side view of the gear layout of the manual transmission, with portion of the gear layout shown in cross section, according to the present embodiment. The gear layout shown in FIG. 1 is accommodated in a transmission case (not shown). An input shaft 1, an output shaft 2 and a reverse shaft 3 (indicated by the alternate long and two short dashes line in FIG. 1) are arranged parallel to one another and rotatably supported by the transmission case.

The input shaft 1 is coupled through a clutch mechanism to a crankshaft of an engine (not shown). When the clutch mechanism is engaged, rotational driving force of the engine is input to the input shaft 1.

A plurality of transmission gear trains 4 to 10 are provided between the input shaft 1 and the output shaft 2 and are used to establish each of the first to sixth forward gears and the reverse gear. Specifically, for the forward gear trains, the first-speed gear train 4, the second-speed gear train 5, the third-speed gear train 6, the fourth-speed gear train, the fifth-speed gear train 8 and the sixth-speed gear train 9 are arranged axially in the stated order from the right side toward the left side in FIG. 1. In addition, the reverse gear train 10 is arranged as the reverse gear train.

The first-speed gear train 4 includes a first-speed drive gear 4a and a first-speed driven gear 4b. The first-speed drive gear 4a is connected to the input shaft 1 so as to rotate integrally with the input shaft 1. The first-speed driven gear 4b is assembled to the output shaft 2 so that the first-speed driven gear 4b is rotatable relative to the output shaft 2. These first-speed drive gear 4a and first-speed driven gear 4b are in mesh with each other.

The second-speed gear train 5 includes a second-speed drive gear 5a and a second-speed driven gear 5b. The second-speed drive gear 5a is connected to the input shaft 1 so as to rotate integrally with the input shaft 1. The second-speed driven gear 5b is assembled to the output shaft 2 so that the second-speed driven gear 5b is rotatable relative to the output shaft 2. These second-speed drive gear 5a and second-speed driven gear 5b are in mesh with each other.

The third-speed gear train 6 includes a third-speed drive gear 6a and a third-speed driven gear 6b. The third-speed drive gear 6a is assembled to the input shaft 1 so that the third-speed drive gear 6a is rotatable relative to the input shaft 1. The third-speed driven gear 6b is connected to the output shaft 2 so as to rotate integrally with the output shaft 2. These third-speed drive gear 6a and third-speed driven gear 6b are in mesh with each other.

The fourth-speed gear train 7 includes a fourth-speed drive gear 7a and a fourth-speed driven gear 7b. The fourth-speed drive gear 7a is assembled to the input shaft 1 so that the fourth-speed drive gear 7a is rotatable relative to the input shaft 1. The fourth-speed driven gear 7b is connected to the output shaft 2 so as to rotate integrally with the output shaft 2. These fourth-speed drive gear 7a and fourth-speed driven gear 7b are in mesh with each other.

The fifth-speed gear train 8 includes a fifth-speed drive gear 8a and a fifth-speed driven gear 8b. The fifth-speed drive gear 8a is assembled to the input shaft 1 so that the fifth-speed drive gear 8a is rotatable relative to the input shaft 1. The fifth-speed driven gear 8b is connected to the output shaft 2 so as to rotate integrally with the output shaft 2. These fifth-speed drive gear 8a and fifth-speed driven gear 8b are in mesh with each other.

The sixth-speed gear train 9 includes a sixth-speed drive gear 9a and a sixth-speed driven gear 9b. The sixth-speed drive gear 9a is assembled to the input shaft 1 so that the sixth-speed drive gear 9a is rotatable relative to the input shaft 1. The sixth-speed driven gear 9b is connected to the output shaft 2 so as to rotate integrally with the output shaft 2. These sixth-speed drive gear 9a and sixth-speed driven gear 9b are in mesh with each other.

Shifting operations (gear shift operations) of transmission gear trains are performed by three synchromesh mechanisms (synchronizers) 11, 12, 13. Note that in the present embodiment, a known double-cone type is shown as an example.

The first synchromesh mechanism 11 is provided on the output shaft 2 between the first-speed driven gear 4b and the second-speed driven gear 5b. That is, when the first synchromesh mechanism 11 is actuated toward the first-speed driven gear 4b, the first-speed driven gear 4b is coupled to the output shaft 2 so as to rotate integrally with the output shaft 2, and then power is transmitted from the input shaft 1 to the output shaft 2 between the first-speed drive gear 4a and the first-speed driven gear 4b (first gear is established). On the other hand, when the first synchromesh mechanism 11 is actuated toward the second-speed driven gear 5b, the second-speed driven gear 5b is coupled to the output shaft 2 so as to rotate integrally with the output shaft 2, and then power is transmitted from the input shaft 1 to the output shaft 2 between the second-speed drive gear 5a and the second-speed driven gear 5b (second gear is established).

The second synchromesh mechanism 12 is provided on the input shaft 1 between the third-speed drive gear 6a and the fourth-speed drive gear 7a. That is, when the second synchromesh mechanism 12 is actuated toward the third-speed drive gear 6a, the third-speed drive gear 6a is coupled to the input shaft 1 so as to rotate integrally with the input shaft 1, and then power is transmitted from the input shaft 1 to the output shaft 2 between the third-speed drive gear 6a and the third-speed driven gear 6b (third gear is established). On the other hand, when the second synchromesh mechanism 12 is actuated toward the fourth-speed drive gear 7a, the fourth-speed drive gear 7a is coupled to the input shaft 1 so as to rotate integrally with the input shaft 1, and then power is transmitted from the input shaft 1 to the output shaft 2 between the fourth-speed drive gear 7a and the fourth-speed driven gear 7b (fourth gear is established).

The third synchromesh mechanism (which may be regarded as a synchronizer according to the aspects of the invention) 13 is provided on the input shaft 1 between the fifth-speed drive gear 8a and the sixth-speed drive gear 9a. That is, when the third synchromesh mechanism 13 is actuated toward the fifth-speed drive gear 8a, the fifth-speed drive gear 8a is coupled to the input shaft 1 so as to rotate integrally with the input shaft 1, and then power is transmitted from the input shaft 1 to the output shaft 2 between the fifth-speed drive gear 8a and the fifth-speed driven gear 8b (fifth gear is established). On the other hand, when the third synchromesh mechanism 13 is actuated toward the sixth-speed drive gear 9a, the sixth-speed drive gear 9a is coupled to the input shaft 1 so as to rotate integrally with the input shaft 1, and then power is transmitted from the input shaft 1 to the output shaft 2 between the sixth-speed drive gear 9a and the sixth-speed driven gear 9b (sixth gear is established).

In this way, during forward running, other than during a gear shift operation, the rotational driving force of the input shaft 1 is transmitted to the output shaft 2 through any one of the transmission gear trains 4 to 9, which is selected by activating any one of the synchromesh mechanisms 11, 12, 13. Note that the synchromesh mechanisms 11,12, 13 are not limited to a double-cone type; instead, they may employ another type.

On the other hand, the reverse gear train 10 includes a reverse drive gear 10a, a reverse driven gear 10b, and a reverse idler gear 10c (indicated by the alternate long and two short dashes line in FIG. 1). The reverse drive gear 10a. is connected to the input shaft 1 so as to rotate integrally with the input shaft 1. The reverse driven gear 10b is assembled to the output shaft 2 so as to rotate integrally with the output shaft 2. The reverse idler gear 10c is assembled to the reverse shaft 3 so that the reverse idler gear 10c is slidably movable relative to the reverse shaft 3. These gears 10a, 10b, 10c do not transmit power during forward running. During reverse running, all the synchromesh mechanisms 11, 12, 13 are set in neutral, and the reverse idler gear 10c is moved in the axial direction of the reverse shaft 3 to mesh with the reverse drive gear 10a and the reverse driven gear 10b, thus transmitting rotation of the reverse drive gear 10a to the reverse driven gear 10b in the reverse direction. By so doing, the output shaft 2 rotates in the direction opposite to that in the case of the forward gears, and driving wheels rotate in the reverse direction. Note that the reverse driven gear 10b is arranged on the outer peripheral side of the first synchromesh mechanism 11 so as to rotate integrally with the first synchromesh mechanism 11.

In this way, the rotational driving force, which is changed at a predetermined gear ratio or rotated in the reverse direction and then transmitted to the output shaft 2, is reduced in speed by a final reduction gear ratio of a final reduction gear train 15 formed of a final drive gear 15a and a final driven gear 15b, and then transmitted to a differential unit 16. Thus, the driving wheels (not shown) are rotated in the forward direction or in the reverse direction.

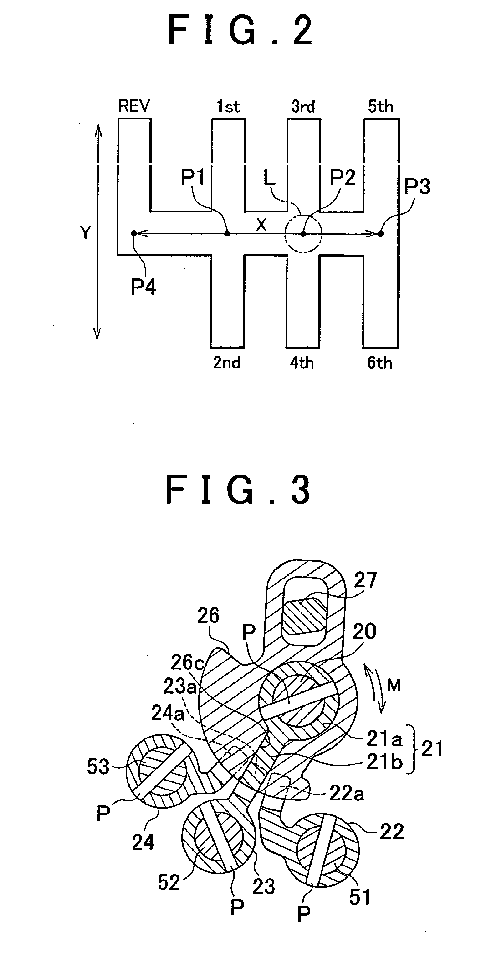

FIG 2 schematically shows the shift pattern (shift gate shape) of the six-speed manual transmission according to the present embodiment. As indicated by the alternate long and two short dashes line in the drawing, the shift lever L is able to perform a select operation in a direction indicated by the arrow X in FIG 2 and a shift operation in a direction indicated by the arrow Y and perpendicular to the direction in which the select operation is performed (select operation direction).

A first and second select position P1, a third and fourth select position P2, a fifth and sixth select position P3 and a reverse select position P4 are aligned in a line in the select operation direction.

Through the shift operation (operation in the arrow Y direction) at the first and second select position P1 the shift lever L may be moved to a first gear position 1st or a second gear position 2nd. When the shift lever L is operated to the first gear position 1st, the first synchromesh mechanism 11 is actuated toward the first-speed driven gear 4b, and then the first-speed driven gear 4b is coupled to the output shaft 2 so as to rotate integrally with the output shaft 2. On the other hand, when the shift lever L is operated to the second gear position 2nd, the first synchromesh mechanism 11 s actuated toward the second-speed driven gear 5b, and then the second-speed driven gear 5b is coupled to the output shaft 2 so as to rotate integrally with the output shaft 2.

Similarly, through the shift operation at the third and fourth select position P2, the shift lever L may be moved to a third gear position 3rd or a fourth gear position 4th. When the shift lever L is operated to the third gear position 3rd, the second synchromesh mechanism 12 is actuated toward the third-speed drive gear 6a, and then the third-speed drive gear 6a is coupled to the input shaft 1 so as to rotate integrally with the input shaft 1. On the other hand, when the shift lever L is operated to the fourth gear position, the second synchromesh mechanism 12 is actuated toward the fourth-speed drive gear 7a, and then the fourth-speed drive gear 7a is coupled to the input shaft 1 so as to rotate integrally with the input shaft 1.

In addition, through the shift operation at the fifth and sixth select position P3, the shift lever L may be moved to a fifth gear position 5th or a sixth gear position 6th. When the shift lever L is operated to the fifth gear position 5th, the third synchromesh mechanism 13 is actuated toward the fifth-speed drive gear 8a, and then the fifth-speed drive gear 8a is coupled to the input shaft 1 so as to rotate integrally with the input shaft 1. On the other hand, when the shift lever L is operated to the sixth gear position 6th, the third synchromesh mechanism 13 is actuated toward the sixth-speed drive gear 9a, and then the sixth-speed drive gear 9a is coupled to the input shaft 1 so as to rotate integrally with the input shaft 1.

Furthermore, through the shift operation at the reverse select position P4, the shift lever L may be moved to a reverse gear position REV When the shift lever L is operated to the reverse gear position REV; all the synchromesh mechanisms 11, 12, 13 are placed in neutral, and the reverse idler gear 10c moves in the axial direction of the reverse shaft 3 to mesh with the reverse drive gear 10a and the reverse driven gear 10b.

Next, a select and shift mechanism will be described. The select and shift mechanism is used to selectively transmit operating force of the shift lever L to the synchromesh mechanism 11, 12, 13 or the reverse idler gear 10c in order to establish each of the forward first to sixth gears and reverse gear by operating the shift lever L.

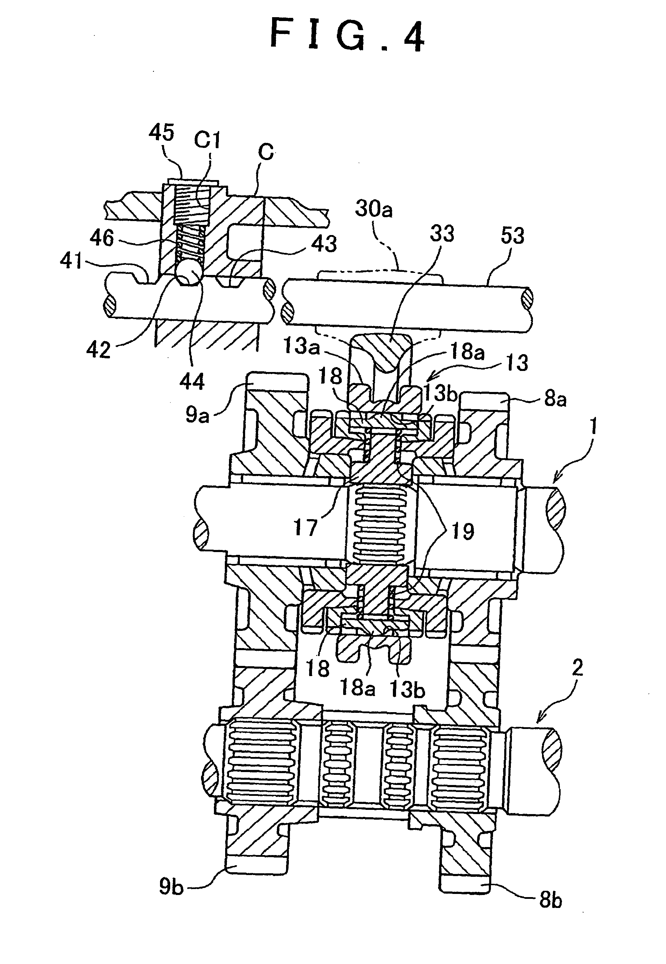

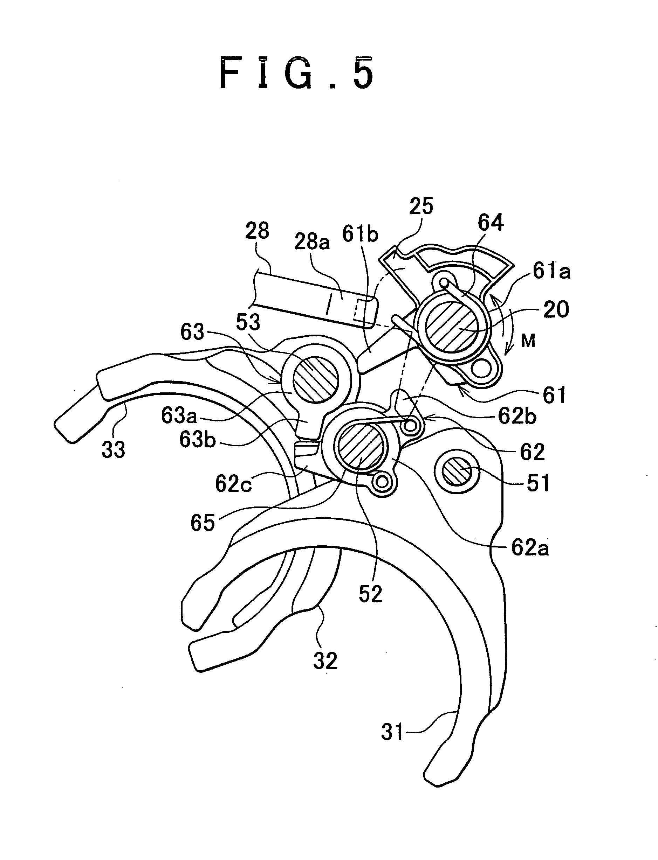

FIG 3 is a cross-sectional view of forward-gear engaging portions 22, 23, 24 and their surrounding portions in the select and shift mechanism as viewed in the axial direction of a shift select shaft 20. Note that in FIG. 3, the reference numeral 22 denotes a forward first and second engaging portion provided on a first and second fork shaft 51, the reference numeral 23 denotes a forward third and fourth engaging portion provided on a third and fourth fork shaft 52, and the reference numeral 24 denotes a forward fifth and sixth engaging portion provided on a fifth and sixth fork shaft 53. FIG. 4 is a cross-sectional view that shows an engaged portion between the fifth and sixth fork shaft 53 and the third synchromesh mechanism 13. FIG. 5 is a cross-sectional view of shift forks 31, 32, 33, provided respectively on the fork shafts 51, 52, 53, and their surrounding portions as viewed in the axial direction of the shift select shaft 20.

As shown in these drawings, in the select and shift mechanism, the shift lever L is coupled to the shift select shaft 20 (see FIG. 3 and FIG. 5) through a select cable and a shift cable (not shown) so that the shift lever L is able to transmit operating force to the shift select shaft 20. Thus, the shift select shaft 20 rotates about its axis (direction indicated by the arrow M in FIG 3 and FIG. 5) in accordance with the select operation of the shift lever L, and slides axially (direction perpendicular to the sheet of FIG 3 and FIG. 5) in accordance with the shift operation of the shift lever L. That is, select operating force (operating force in a direction indicated by the arrow X in FIG 2) applied to the shift lever L is transmitted through the select cable as rotational force about the axis of the shift select shaft 20, and shift operating force (operating force in a direction indicated by the arrow Y in FIG 2) applied to the shift lever L is transmitted through the shift cable as a sliding force in the axial direction of the shift select shaft 20. Note that the reference numeral 27 in FIG 3 denotes a select inner lever that receives the select operating force of the shift lever L through the select cable and applies rotational force to the shift select shaft 20 about its axis.

In addition, a sleeve 13a (see FIG. 4) provided for each of the synchromesh mechanisms 11, 12, 13 is engaged with the corresponding shift fork 33 (FIG. 4 only the fifth and sixth shift fork 33 is shown from among the three shift forks 31, 32, 33), and the proximal end of each shift fork 33 is supported by the corresponding forward-gear fork shaft 53 (FIG. 4 only shows the fifth and sixth fork shaft 53 from among the fork shafts 51, 52, 53). Then, through the rotation of the shift select shaft 20 about its axis in accordance with the select operation of the shift lever L, one of the fork shafts 53 (51, 52) is selected so as to be able to transmit shift operating force. Through the sliding of the shift select shaft 20 in accordance with the shift operation of the shift lever L, the selected one of the fork shafts 53 (51, 52) slides axially, and a predetermined one of the synchromesh mechanisms 13 (11, 12) is actuated through one of the shift forks 33 (31, 32) provided on the fork shafts 53 (51, 52).

As shown in FIG 3, the shift inner lever 21 for selecting one of the fork shafts 52 (51, 53) has a cylindrical portion (proximal portion) 21a that is fixedly fitted around the outer periphery of the shift select shaft 20 and an arm portion 21b that extends radially from the cylindrical portion 21a. In addition, an engaging pin P is inserted from the shift select shaft 20 to the cylindrical portion 21a, and the shift inner lever 21 is coupled to the shift select shaft 20 so that the shift inner lever 21 rotates integrally and slides integrally with the shift select shaft 20.

An interlock plate (interlock member) 26 is fitted around the cylindrical portion 21a of the shift inner lever 21 so that the interlock plate 26 is axially movable and is not rotatable about its axis. An engaging piece passage 26c is formed in the interlock plate 26 so as to extend in the axial direction. The engaging piece passage 26c is formed of a pair of opposite guide surfaces that slide on both sides in the rotational direction of the arm portion 21b of the shift inner lever 21. Then, the gap between the guide surfaces of the engaging piece passage 26c prevents the plurality of heads 22a, 23a, 24a, engaged with the arm portion 21b of the shift inner lever 21 and moved axially, from passing therethrough at the same time, that is, allows only one of the heads 23a (22a, 24a) to pass therethrough. These heads 22a, 23a, 24a are respectively provided two for the forward-gear engaging portions 22, 23, 24 so as to form a U shape. Note that, as described above, the interlock plate 26 is axially movable relative to the cylindrical portion 21a of the shift inner lever 21, but the interlock plate 26 is not axially movable relative to the transmission case.

In addition, when the select operation of the shift lever L is performed in the select direction indicated by the arrow X in FIG. 2, the operating force is transmitted by the select cable through the select inner lever 27 to the shift select shaft 20, and then the shift select shaft 20 is rotated and placed at a rotated position corresponding to the position to which the shift lever L is operated. FIG 3 shows the rotated position of the shift select shaft 20 and shift inner lever 21 when the shift lever L is operated to the third and fourth select position P2.

In addition, when the shift operation of the shift lever L is performed in the shift direction indicated by the arrow Y in FIG 2, the operating force is transmitted through the shift cable to the shift select shaft 20, and then the shift select shaft 20 slides axially (direction perpendicular to the sheet of FIG 3) and is placed at a slide position corresponding to the position to which the shift lever L is operated.

On the other hand, the forward-gear engaging portions 22, 23, 24 respectively having the pairs of heads (forward gear engaging pieces) 22a, 23a, 24a that are arranged axially on both sides with the rotating path of the arm portion 21b of the shift inner lever 21 placed in between are respectively arranged on the fork shafts 51, 52, 53 (FIG 3 shows the first and second fork shaft 51, the third and fourth fork shaft 52 and the fifth and sixth fork shaft 53, and FIG 4 only shows the fifth and sixth fork shaft 53) that are arranged in correspondence with the synchromesh mechanisms 11, 12, 13. In addition, engaging pins P are respectively inserted through the fork shafts 51, 52, 53 and the forward-gear engaging portions 22, 23, 24, so the forward-gear engaging portions 22, 23, 24 are respectively coupled to the fork shafts 51, 52, 53 so as to slide together.

In addition, the heads 22a, 23a, 24a are arranged in accordance with the select operation at a position at which the arm portion 21b of the shift inner lever 21 is selectively engageable, and the selected heads 22a, 23a, or 24a are engaged with the arm portion 21b and moved by the arm portion 21b in the axial direction of the shift select shaft 20. The pairs of heads 22a, 22a; 23a, 23a; 24a, 24a, that is, the forward-gear engaging portions 22, 23, 24 respectively having the pairs of heads 22a, 22a; 23a, 23a; 24a, 24a, are axially moved from the neutral position in association with actuation of the synchromesh mechanisms 11, 12, 13 and gear shift operations into forward gears after that, respectively.

Furthermore, as shown in FIG 5, a reverse lever 25 is provided on the shift select shaft 20 so that the reverse lever 25 rotates integrally and slides integrally with the shift select shaft 20. In addition, a reverse arm (reverse-gear shift member) 28 having a reverse head 28a is arranged adjacent to a locus of rotation of the reverse lever 25 at the time when the shift select shaft 20 rotates. The distal end of the reverse arm 28, opposite to the side at which the reverse head 28a is formed, is engaged with the reverse idler gear 10c. Thus, when the select operation is performed to move the shift lever L to the reverse select position P4 shown in FIG 2, the reverse lever 25 is rotated to the position facing the reverse head 28a (see the imaginary line in FIG 5). In this state, when the shift operation is performed to move the shift lever L to the reverse gear position REV, for example, the reverse lever 25 is moved to the far side of the sheet of FIG 5, and then the reverse lever 25 contacts the reverse head 28a to move the reverse arm 28 in the axial direction of the shift select shaft 20 (referred to as reverse gear shift direction). Thus, the reverse idler gear 10c moves in the axial direction of the reverse shaft 3 to mesh with the reverse drive gear 10a and the reverse driven gear 10b.

When the shift lever L is placed at the neutral position (in the present embodiment, the third and fourth select position P2) and no gear is established, the arm portion 21b of the shift inner lever 21 is also placed at the neutral position in the axial direction and in the rotational direction, and the heads 22a, 22a; 23a, 23a; 24a, 24a are arranged adjacent to one other on both sides of the rotating path of the arm portion 21b.

Then, in accordance with the select operation of the shift lever L, the arm portion 21b of the shift inner lever 21 rotates together with the shift select shaft 20, and is selectively arranged at a position at which the arm portion 21b is engageable with the heads 22a, 23a, or 24a arranged at the rotated position corresponding to the selected position of the shift lever L. For example, when the shift lever L is operated to the first and second select position P1, the arm portion 21b of the shift inner lever 21 is arranged so as to be engageable with the heads 22a of the forward-gear engaging portion 22 provided on the first and second fork shaft 51. When the shift lever L is operated to the third and fourth select position P2, the arm portion 21b of the shift inner lever 21 is arranged so as to be engageable with the heads 23a of the forward-gear engaging portion 23 provided on the third and fourth fork shaft 52. When the shift lever L is operated to the fifth and sixth select position P3, the arm portion 21b of the shift inner lever 21 is arranged so as to be engageable with the heads 24a of the forward-gear engaging portion 24 provided on the fifth and sixth fork shaft 53. In addition, when the shift lever L is operated to the reverse select position P4, the shift select shaft 20 rotates in a counterclockwise direction in FIG 5 and then the reverse lever 25 is arranged so as to be engageable with the reverse head 28a of the reverse arm 28.

In this way, the arm portion 21b of the shift inner lever 21 is arranged so as to be engageable with any one of the forward-gear heads 23a (22a, 24a), so one of the fork shafts 52 (51, 53) is selected so as to be able to transmit operating force. Alternatively, the reverse lever 25 is arranged so as to be engageable with the reverse head 28a of the reverse arm 28.

In this state, when the shift lever L is operated in the shift direction, the operating force is transmitted through the shift cable to the shift select shaft 20. Thus, the shift select shaft 20 slides axially. Then, when the arm portion 21b of the shift inner lever 21 is engaged with any one of the (forward-gear) heads 23a (22a, 24a), the arm portion 21b slides the engaged head 23a (22a, 24a), any one of the forward-gear engaging portions 23 (22, 24) having the engaged head 23a (22a, 24a) and the fork shaft 52 (51, 53) that moves together with the forward-gear engaging portion 23 (22, 24) to thereby cause any one of the synchromesh mechanisms 12 (11, 13) to be actuated.

In addition, when the reverse lever 25 is engaged with the reverse head 28a, by axially sliding the reverse arm 28 together with the reverse head 28a, the reverse arm 28 moves the reverse idler gear 10c in the axial direction of the reverse shaft 3.

For example, as shown in FIG 3, when the shift operation is performed to move the shift lever L to the third gear position 3rd from the state where the arm portion 21b of the shift inner lever 21 is arranged so as to be engageable with the heads 23a of the forward-gear engaging portion 23 provided on the third and fourth fork shaft 52, the shift select shaft 20 moves toward the far side of the sheet of FIG 3. In accordance with this, the arm portion 21b, the forward-gear engaging portion 23, the third and fourth fork shaft 52 and the third and fourth shift fork 32 move in the same direction. Thus, the second synchromesh mechanism 12 is actuated toward the third-speed drive gear 6a to establish third gear. In addition, when the shift operation is performed to move the-shift lever L to the fourth gear position 4th from the state shown in FIG. 3, the shift select shaft 20 moves toward the near side of the sheet of FIG. 3. In accordance with this, the arm portion 21b, the forward-gear engaging portion 23, the third and fourth fork shaft 52 and the third and fourth shift fork 32 also move in the same direction. Thus, the second synchromesh mechanism 12 is actuated toward the fourth-speed drive gear 7a to establish fourth gear.

FIG 4 is a cross-sectional view that shows the engaged portion between the fifth and sixth fork shaft 53 and the third synchromesh mechanism 13. As shown in the drawing, the shift fork 33 is coupled to the fork shaft 53 through a coupling portion 30a indicated by the alternate long and two short dashes line, and the distal end of the shift fork 33 is engaged with the sleeve 13a of the third synchromesh mechanism 13.

In addition, the fork shaft 53 has three lock ball grooves 41, 42, 43 corresponding to the fifth gear, neutral position and sixth gear, and a lock ball 44 that is pressed toward the fork shaft 53 is selectively fitted in any one of these lock ball grooves 41, 42, 43. The lock ball 44 is accommodated inside a hole C1 formed in the transmission case C, and is pressed toward the fork shaft 53 by a compressed coil spring 46 fixed to a plug 45 that is also accommodated in the hole Cl. With the above structure, gear decoupling may be prevented and a crisp feel may be obtained.

When the fork shaft 51, 52 or 53, on which the corresponding forward-gear engaging portion 22, 23, or 24 is provided, slightly moves axially from the neutral position, unless the lock ball 44 is completely disengaged from the lock ball groove 42, a force for returning to a neutral position is applied to the fork shaft 53 and the forward-gear engaging portions 22, 23, 24 (heads 22a, 23a, 24a) fixed to the fork shaft 53 because the lock ball 44 is pressed toward the lock ball groove 42.

In addition, as shown in FIG. 4, in the synchromesh mechanism 13, a plurality of synchronizer keys 18 are arranged at the outer diameter side of a synchronizer hub 17 at equal intervals in the circumferential direction, and a protrusion 18a formed to protrude toward the outer peripheral side at the middle of each synchronizer key 18 is engaged with a groove 13b formed on the inner peripheral surface of the sleeve 13a and arranged in the circumferential direction. The synchronizer keys 18 are pressed against the inner peripheral surface of the sleeve 13a by key springs 19 arranged inside the synchronizer hub 17. With the above structure as well, as in the case of the mechanism formed of the lock ball 44, and the like, when the heads 22a, 23a, or 24a and the fork shaft 53 slightly move axially from the neutral position, unless the protrusions 18a of the synchronizer keys 18 are completely disengaged from the groove 13b formed on the inner peripheral surface of the sleeve 13a, a force for returning to the neutral position is applied to the sleeve 13a because the synchronizer keys 18 are pressed against the inner peripheral surface of the sleeve 13a.

Note that the engaged portion between the first and second fork shaft 51 and the first synchromesh mechanism 11 and the engaged portion between the third and fourth fork shaft 52 and the second synchromesh mechanism 12 also have the similar structure.

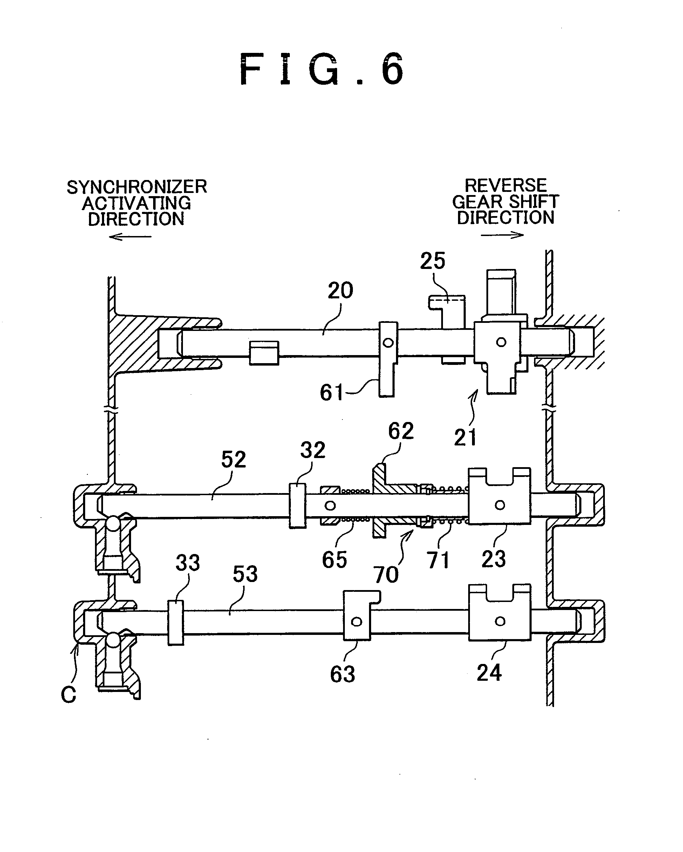

Next, the characterizing portion of the gear noise preventing device for a manual transmission according to the present embodiment will be described with reference to FIG. 2 to FIG. 14C. The gear noise preventing device is to prevent the occurrence of reverse shift gear noise. At the time of a reverse gear shift operation, the gear noise preventing device activating the synchromesh mechanism (for example, actuates the third synchromesh mechanism 13 in a direction to establish sixth gear) to sufficiently decrease or stop rotation of the input shaft 1, and then couples the input shaft 1 with the output shaft 2. In the present embodiment, an example of a gear noise preventing device that prevents gear noise by activating the third synchromesh mechanism 13 will be described. Instead, the synchromesh mechanism used for gear noise prevention may be the one other than the third synchromesh mechanism 13. Note that FIG. 6 shows the shift select shaft 20, the third and fourth fork shaft 52 and the fifth and sixth fork shaft 53 on the same plane in order to show the positional relationship in the axial direction among a first head 61 of the first and second fork shaft 51 of the shift select shaft 20, a second head 62 of the third and fourth fork shaft 52, and a third head 63 of the fifth and sixth fork shaft 53; however, the shift select shaft 20, the third and fourth fork shaft 52 and the fifth and sixth fork shaft 53 are actually not on the same plane.

As shown in FIG. 5 and FIG. 6, the gear noise preventing device includes the first head (first head member) 61 provided on the shift select shaft 20, the second head (intermediate head member) 62 provided on the third and fourth fork shaft 52, and the third head (pre-balk head member) 63 provided on the fifth and sixth fork shaft 53. These heads 61, 62, 63 are arranged at positions (positions located a predetermined interval from the arrangement position of the select and shift mechanism in the axial direction of the shift select shaft 20) away from the arrangement position of the select and shift mechanism formed of the shift inner lever 21 and the forward-gear engaging portions 22, 23, 24.

The first head 61 is provided integrally with the shift select shaft 20. That is, the first head 61 rotates with the rotation of the shift select shaft 20, and axially moves with the axial sliding of the shift select shaft 20. In other words, as the shift select shaft 20 rotates with the select operation (operation in the arrow X direction in FIG. 2) of the shift lever L, the first head 61 rotates in the direction that coincides with the direction in which the shift select shaft 20 rotates. As the shift select shaft 20 axially slides with the shift operation (operation in the arrow Y direction in FIG 2) of the shift lever L, the first head 61 axially moves in the direction that coincides with the direction in which the shift select shaft 20 axially slides.

Note that in the present embodiment, when the select operation is performed to move the shift lever L from the third and fourth select position P2 to the fifth and sixth select position P3, the shift select shaft 20 and the first head 61 rotate in the clockwise direction in FIG. 5, whereas, on the other hand, when the select operation is performed to move the shift lever L from the third and fourth select position P2 to the reverse select position P4, the shift select shaft 20 and the first head 61 rotate in the counterclockwise direction in FIG. 5.

In addition, the first head 61 has a sleeve portion 61a and a pressing pawl 61b. The sleeve portion 61a is formed in a cylindrical shape so as to surround the outer periphery of the shift select shaft 20. The pressing pawl 61b extends from portion of the outer peripheral surface of the sleeve portion 61a toward the outer peripheral side. The pressing pawl 61b is formed in a substantially trapezoidal shape such that the shape (shape shown in FIG. 5) as viewed in the axial direction of the shift select shaft 20 tapers toward the outer peripheral side. Among the positions of the pressing pawl 61b shown in FIG 5, the solid line shows the state where the shift lever L is placed at the third and fourth select position P2, and the alternate long and two short dashes line shows the state where the shift lever L is placed at the reverse select position P4. That is, when the select operation is performed to move the shift lever L from the third and fourth select position P2 to the reverse select position P4, in accordance with this, the pressing pawl 61b rotates from the position indicated by the solid line in the drawing to the position indicated by the alternate long and two short dashes line.

Furthermore, a coil spring 64 is wound around the shift select shaft 20, and the urging force of the coil spring 64 in the circumferential direction limits the operating force applied to the shift select shaft 20 in the rotational direction.

The second head 62 is provided so as to be rotatable and axially movable relative to the third and fourth fork shaft 52. That is, the second head 62 is arranged so as to be able to rotate independently of the third and fourth fork shaft 52 and axially move independently of the third and fourth fork shaft 52.

In addition, the second head 62 has a sleeve portion 62a, a pressure receiving pawl 62b, and a pre-balk pressing pawl 62c. The sleeve portion 62a is formed in a cylindrical shape so as to surround the outer periphery of the third and fourth fork shaft 52. The pressure receiving pawl 62b extends from portion of the outer peripheral surface of the sleeve portion 62a toward the outer peripheral side. Similarly, the pre-balk pressing pawl 62c extends from portion of the outer peripheral surface of the sleeve portion 62a toward the outer peripheral side.

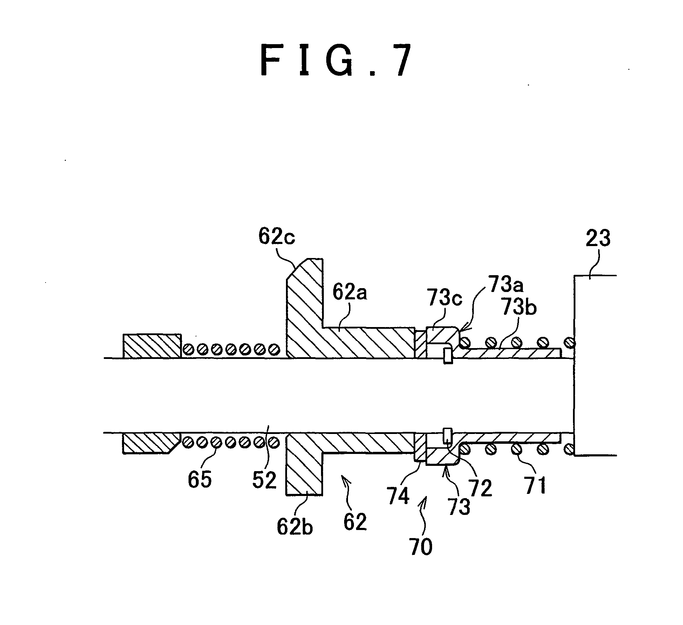

FIG 7 is a view that shows the third and fourth fork shaft 52 around the arrangement position of the second head 62 and shows the structure of an urging mechanism (standby mechanism) 70 provided on the third and fourth fork shaft 52. As shown in FIG 7, the urging mechanism 70 is provided on the third and fourth fork shaft 52. The urging mechanism 70 presses the second head 62 in a direction opposite to the reverse gear shift direction (in this case, toward the left side in FIG 7 (toward the far side perpendicular to the sheet of FIG 5)) on the third and fourth fork shaft 52. Here, the direction opposite to the reverse gear shift direction is the axial direction of the third and fourth fork shaft 52 and is a direction in which the third synchromesh mechanism 13 is actuated in a direction to establish sixth gear at the time when the gear noise preventing device works. Hereinafter, the above direction is also referred to as a synchronizer activating direction.

The urging mechanism 70 includes a coil spring (elastic body) 71, which serves as an urging member to urge the second head 62 in the synchronizer activating direction and a snap ring (stopper) 72, which serves as a restricting member that restricts the stroke by which the second head 62 is moved by the urging force of the coil spring 71 in the synchronizer activating direction. That is, the urging mechanism 70 presses the second head 62 in the synchronizer activating direction by the urging force of the coil spring 71, and restricts the stroke of the second head 62 in the synchronizer activating direction by the snap ring 72.

Specifically, the snap ring 72 is fitted on the third and fourth fork shaft 52 so that the snap ring 72 is axially immovable relative to the third and fourth fork shaft 52. The coil spring 71 is provided on the third and fourth fork shaft 52, and is arranged in a compressed state between the second head 62 and the forward-gear engaging portion 23. One end of the coil spring 71 (right end in FIG. 7) is in contact with the forward-gear engaging portion 23, and the other end (left end in FIG 7) of the coil spring 71 is in contact with a stepped portion 73a of a spring seat 73.

The spring seat 73 is formed in a substantially cylindrical shape, and is provided on the third and fourth fork shaft 52 so as to be slidable thereon. The stepped portion 73a is provided in the axially middle of the spring seat 73. A small-diameter sleeve portion 73b is provided on one side of the stepped portion 73a (right side in FIG. 7), and a large-diameter sleeve portion 73c is provided on the other side (left side in FIG. 7).

The inner diameter of the small-diameter sleeve portion 73b is slightly larger than the outer diameter of the third and fourth fork shaft 52, and the spring seat 73 is slidable on the third and fourth fork shaft 52. The inner diameter of the large-diameter sleeve portion 73c is larger than the outer diameter of the third and fourth fork shaft 52, and the snap ring 72 is arranged inside the large-diameter sleeve portion 73c. Then, in accordance with movement of the spring seat 73, the stepped portion 73a approaches or leaves the snap ring 72. In addition, the outer diameter of the large-diameter sleeve portion 73c is larger than the outer diameter of the small-diameter sleeve portion 73b.

The distance between the snap ring 72 and the forward-gear engaging portion 23 is larger than the axial size of the small-diameter sleeve portion 73b. Then, a gap is provided between the right end of the small-diameter sleeve portion 73b and the forward-gear engaging portion 23. In addition, a thrust washer 74 made of polytetrafluoroethylene (PTFE) is placed between the left end of the large-diameter sleeve portion 73c and the sleeve portion 62a of the second head 62. The thrust washer 74 is provided so as to be slidable on the third and fourth fork shaft 52.

In the thus structured urging mechanism 70, the urging force of the coil spring 71 acts on the stepped portion 73a of the spring seat 73, and then the urging force presses the spring seat 73, the thrust washer 74 and the second head 62 in the synchronizer activating direction. In addition, the stepped portion 73a of the spring seat 73 contacts the snap ring 72 to thereby restrict movement of the second head 62 in the synchronizer activating direction. That is, the snap ring 72 prevents the second head 62 from moving in the synchronizer activating direction beyond a predetermined amount.

The snap ring 72 is set at a position such that, when the second head 62 is pressed in the synchronizer activating direction by the urging force of the coil spring 71 after completion of synchronization, the sleeve 13a of the third synchromesh mechanism 13 moves in the same direction, and the sleeve 13a of the third synchromesh mechanism 13 does not mesh with the gear piece of the sixth-speed drive gear 9a. In other words, the snap ring 72 is provided at a position such that, in the case where the shift operation is performed to move the shift lever L to the reverse gear position REV, when the pressing force from the second head 62 to the third head 63 in the synchronizer activating direction is released, the third synchromesh mechanism 13 may return to a neutral position.

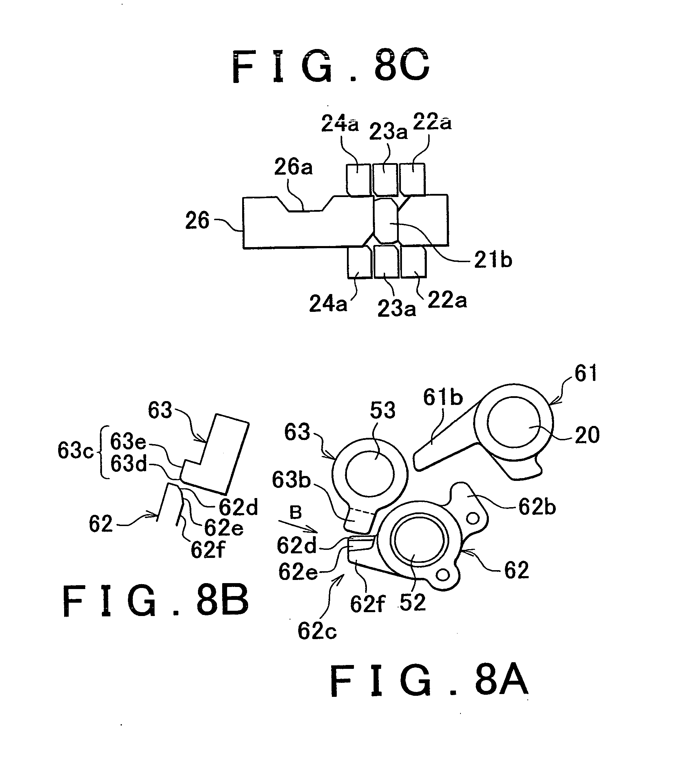

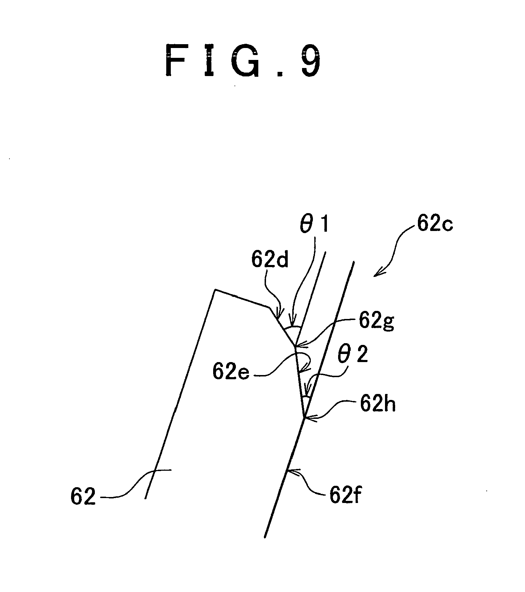

In addition, the pre-balk pressing pawl 62c of the second head 62 is formed at a position that is spaced at an angle of 180 degrees in the circumferential direction of the second head 62 with respect to the position at which the pressure receiving pawl 62b is formed. That is, the pre-balk pressing pawl 62c is formed at a position on the opposite side to the position at which the pressure receiving pawl 62b is formed. Then, as shown in FIG. 9, the surface of the pre-balk pressing pawl 62c has two tapered surfaces 62d, 62e and a flat surface 62f. The tapered surfaces 62d, 62e are inclined toward the far side of the sheet of FIG. 5 toward the downstream side in a rotational direction (clockwise direction in FIG. 5) in which the second head 62 rotates by the pressing force applied from the pressing pawl 61b of the first head 61. The flat surface 62f is parallel to the sheet of FIG. 5. FIG. 9 shows the shape of the pre-balk pressing pawl 62c of the second head 62 as viewed in the arrow B direction in FIG 8A.

The flat surface 62f is a surface extending in a direction perpendicular to the synchronizer activating direction and is formed to be flat. The two tapered surfaces 62d, 62e have different inclination angles θ1, θ2 with respect to the flat surface 62f. The second tapered surface 62e is an inclined surface that is continuous to the flat surface 62f, and has the inclination angle θ2 that is smaller than or equal to 45 degrees with respect to the flat surface 62f. The first tapered surface 62d is an inclined surface that is continuous to the second tapered surface 62e, and has the inclination angle θ1 that exceeds 45 degrees with respect to the flat surface 62f. That is, the inclination angle θ1 of the first tapered surface 62d is larger than the inclination angle θ2 of the second tapered surface 62e. Thus, an intersection line portion (boundary portion) 62g between both tapered surfaces 62d and 62e of the pre-balk pressing pawl 62c protrudes outward.

Here, the first tapered surface 62d regulates an activation position at which the fifth and sixth fork shaft 53 is activated. The reason why the inclination angle θ1 of the first tapered surface 62d is set to be relatively large is because, in consideration of a manufacturing tolerance, a positioning error, and the like, when the gear noise preventing device works, the pre-balk pressing pawl 62c is reliably caused to contact the pressure receiving portion 63c of the third head 63 in accordance with the rotation of the second head 62 to actuate (move) the fifth and sixth fork shaft 53.

The second tapered surface 62e regulates an activation position at which the third synchromesh mechanism 13 is activated. The reason why the inclination angle θ2 of the second tapered surface 62e is set to be relatively small is to suppress an increase in operating load of the shift lever L due to a load (pre-balk load) at the time when the gear noise preventing device works. The flat surface 62f regulates the stroke of the sleeve 13a of the third synchromesh mechanism 13 at the time of the select operation. With the flat surface 62f, the axial position of the sleeve 13a of the third synchromesh mechanism 13 at the time of completion of the select operation is accurately regulated.

In addition, the inclination angles θ1, θ2 of both tapered surfaces 62d, 62e are set so that a pre-balk load is not generated when the pressure receiving portion 63c of the third head 63 is in contact with the first tapered surface 62d. That is, the inclination angles θ1, θ2 of both tapered surfaces 62d, 62e are set so that the third synchromesh mechanism 13 is not activated at the time when the intersection line portion 62g contacts the pressure receiving portion 63c of the third head 63.

In addition, a coil spring 65 that applies an urging force to the second head 62 is wound around the third and fourth fork shaft 52. The coil spring 65 applies the second head 62 with an urging force in a direction opposite to the rotational direction of the pressing force applied from the pressing pawl 61b of the first head 61. That is, the second head 62 is returned to an initial position (position shown in FIG 5; hereinafter, the position is referred to as initial rotational position of the second head 62) by the urging force of the coil spring 65 when the second head 62 receives no pressing force from the pressing pawl 61b of the first head 61 or when the pressing force is released.

Furthermore, the coil spring 65 applies the second head 62 with an urging force in the reverse gear shift direction, that is, an urging force in a direction opposite to the synchronizer activating direction. In this way, the urging force of the coil spring 65 and the urging force of the coil spring 71 of the urging mechanism 70 are applied to the second head 62 in opposite directions.

Here, the urging force of the coil spring 71 is larger than the urging force of the coil spring 65. Thus, when no axial external force, other than the urging forces from the coil springs 65 and 71, is applied, as shown in FIG. 7, the spring seat 73 is pressed in the synchronizer activating direction and moved to a position at which the spring seat 73 contacts the snap ring 72. Then, the second head 62 is placed at a position at which the second head 62 is fully pressed in the synchronizer activating direction (hereinafter, the position is referred to as initial axial position of the second head 62).

On the other hand, when an external force, which exceeds the urging force of the coil spring 65, is applied to the second head 62 in the synchronizer activating direction, the second head 62 moves in the synchronizer activating direction by that external force against the urging force of the coil spring 65. In addition, when an external force, which exceeds the urging force of the coil spring 71, is applied to the second head 62 in the reverse gear shift direction, the second head 62 moves in the reverse gear shift direction by that external force against the urging force of the coil spring 71. In this case, the stepped portion 73a of the spring seat 73 moves away from the snap ring 72 to compress the coil spring 71.

When no load (pre-balk load) is generated at the time when the gear noise preventing device works, the urging force of the coil spring 71 is preset to a value at which the stepped portion 73a of the spring seat 73 may be brought into contact with the snap ring 72. In addition, when a pre-balk load is generated, the urging force of the coil spring 71 is preset to a value at which the pre-balk load may be received. That is, when the coil spring 71 receives a pre-balk load, the coil spring 71 is compresses, and the spring seat 73 moves in the reverse gear shift direction. In this state, the urging force of the coil spring 71 is set so as to constantly ensure a gap between the small-diameter sleeve portion 73b of the spring seat 73 and the forward-gear engaging portion 23.

Then, in the case where the second head 62 is placed at the initial axial, position, when the first head 61 rotates (rotates in the counterclockwise direction in FIG 5), the pressure receiving pawl 62b is arranged at a position at which the pressure receiving pawl 62b receives a pressing force from the pressing pawl 61b of the first head 61. That is, these pressing pawl 61b of the first head 61 and the pressure receiving pawl 62b of the second head 62 are arranged so as to face each other on an imaginary plane that extends in a direction perpendicular to the axes of the shift select shaft 20 and third and fourth fork shaft 52.

The third head 63 is provided integrally with the fifth and sixth fork shaft 53. That is, the third head 63 axially moves as the fifth and sixth fork shaft 53 axially slides (reverse gear shift direction or synchronizer activating direction). In other words, as the fifth and sixth fork shaft 53 axially slides with the shift operation to the fifth gear or sixth gear, the third head 63 axially moves in the same direction.

In addition, the third head 63 has a sleeve portion 63a and a pre-balk pressure receiving pawl 63b. The sleeve portion 63a is formed in a cylindrical shape so as to surround the outer periphery of the fifth and sixth fork shaft 53. The pre-balk pressure receiving pawl 63b extends from portion of the outer peripheral surface of the sleeve portion 63a toward the outer peripheral side. The pre-balk pressure receiving pawl 63b is formed so as to face the pre-balk pressing pawl 62c formed on the second head 62. That is, the pre-balk pressure receiving pawl 63b is formed at a position at which, when the second head 62 rotates by the pressing force applied from the pressing pawl 61b of the first head 61, the first tapered surface 62d, the second tapered surface 62e or the flat surface 62f, formed on the pre-balk pressing pawl 62c of the second head 62, is in sliding contact with the pre-balk pressure receiving pawl 63b.

In addition, the pre-balk pressure receiving pawl 63b has a pressure receiving portion 63c that faces the first tapered surface 62d, second tapered surface 62e and flat surface 62f of the pre-balk pressing pawl 62c (see FIG. 8B). The surface of the pressure receiving portion 63c has a rounded surface 63d that is formed in a rounded shape and a flat surface 63e that is continuous to the rounded surface 63d. The flat surface 63e extends in a direction perpendicular to the synchronizer activating direction and is formed to be flat. Thus, under the situation in which the second head 62 rotates and then the first tapered surface 62d, second tapered surface 62e and flat surface 62f of the pre-balk pressing pawl 62c applies the pressing force to the pressure receiving portion 63c of the pre-balk pressure receiving pawl 63b of the third head 63, the component force of the pressing force from the second head 62 is applied in the axial direction of the third head 63. Hence, the third head 63 axially slides together with the fifth and sixth fork shaft 53 (slides toward the near side in a direction perpendicular to the sheet of FIG. 5). Note that the shape of the pressure receiving portion 63c is not limited; for example, an inclined surface may be provided instead of the rounded surface 63d.

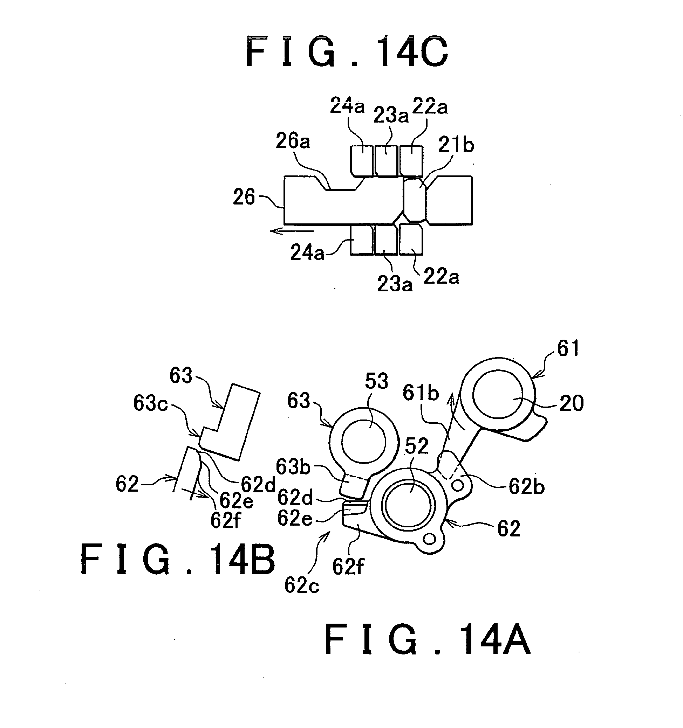

Next, the operation of the thus structured gear noise preventing device will be described in order with reference to FIG. 8A to FIG. 8C, and FIG. 10A to FIG. 14C. Here, first, the reverse gear shift operation (shift operation of the shift lever L from the third and fourth select position P2 to the reverse gear position REV) will be described with reference to FIG. 8A to FIG. 8C, and FIG. 10A to FIG. 11C. Then, the reverse gear release operation (operation of the shift lever L from the reverse gear position REV to the third and fourth select position P2) will be described with reference to FIG 14A to FIG 14C.

FIG. 8A, FIG. 10A, FIG. 11A, FIG. 12A, FIG. 13A, and FIG. 14A are views of the gear noise preventing device as viewed in the axial direction of the shift select shaft 20. In addition, FIG. 8B, FIG. 10B, FIG. 11B, FIG. 12B, FIG. 13B, and FIG. 14B are views that show the positional relationship between the second head 62 and the third head 63 as viewed in the arrow B direction in FIG. 8A. Furthermore, FIG. 8C, FIG. 10C, FIG. 11C, FIG. 12C, FIG. 13C, and FIG. 14C are views that show the positional relationship between the arm portion 21b of the shift inner lever 21 and the heads 22a, 22a; 23a, 23a; 24a, 24a, and developed views of cross section of the interlock plate 26, taken along the locus of movement of the arm portion 21b. Note that the interlock plate 26 has a recess 26a that allows movement of the fifth and sixth heads 24a at the time when pre-balk is activated (at the time when the third synchromesh mechanism 13 is activated), which will be described later.

FIG. 8A to FIG. 8C show a state before the reverse gear shift operation is performed. For example, FIG. 8A to FIG. 8C show a state where, when the reverse gear shift operation is performed immediately after the vehicle is stopped from a forward running state, the shift lever L is operated to the third and fourth select position P2. In this state, as shown in FIG. 8A and FIG. 8B, the heads 61, 62, 63 are placed at initial positions at which the heads 61, 62, 63 face at a predetermined gap with no contact with one another. That is, operating force is not transmitted among the heads 61, 62, 63. In addition, as shown in FIG 8C, the arm portion 21b of the shift inner lever 21 is placed at a position at which the arm portion 21b is engageable with the heads 23a of the forward-gear engaging portion 23 provided on the third and fourth fork shaft 52.

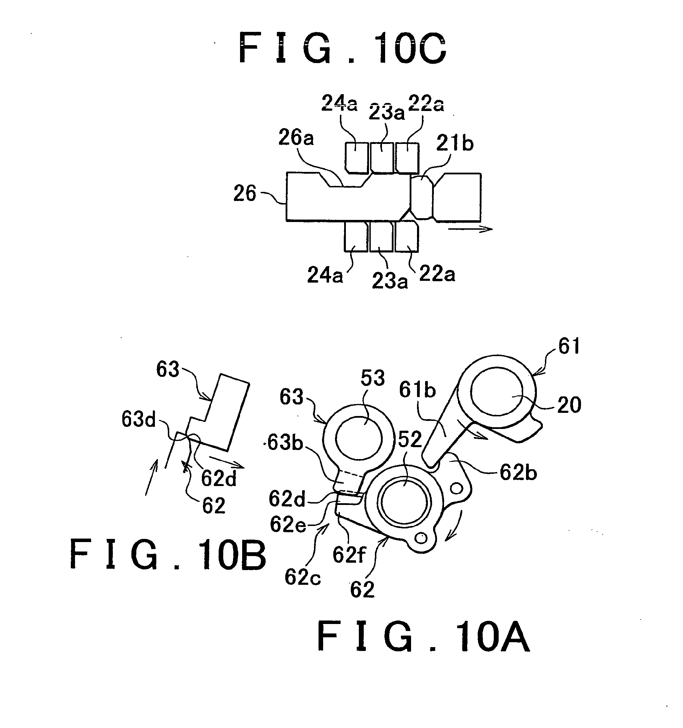

In this state, when the select operation is initiated to move the shift lever L toward the reverse select position P4, as shown in FIG. 10A, the first head 61 rotates with the rotation of the shift select shaft 20 (see the arrow in the drawing) and then the pressing pawl 61b of the first head 61 contacts the pressure receiving pawl 62b of the second head 62. Thus, the rotational force of the first head 61 is transmitted through the pressing pawl 61b and the pressure receiving pawl 62b as the rotational force of the second head 62. Then, in accordance with an increase in operating amount of the shift lever L toward the reverse select position P4, the rotational amount of the second head 62 also increases. FIG 10A, FIG. 11A and FIG. 12A show the state where the rotational amount of the second head 62 gradually increases in order.

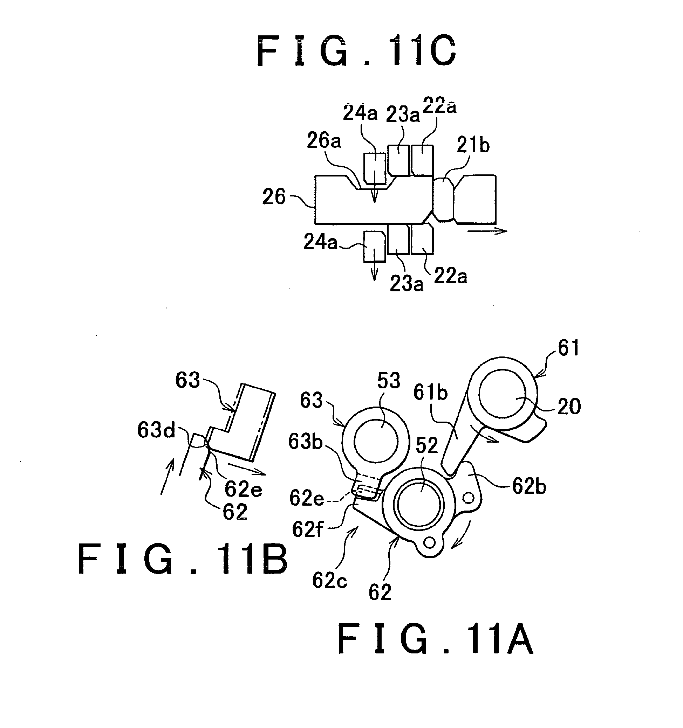

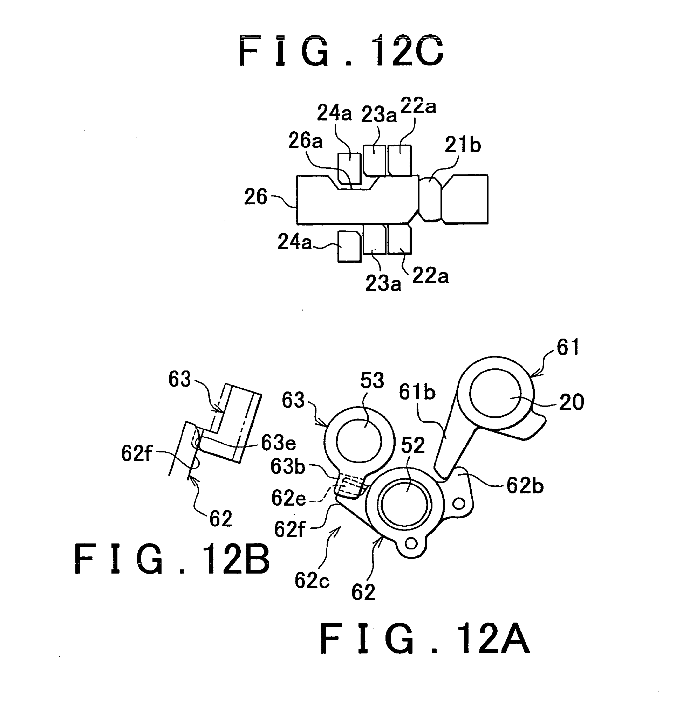

In this way, as the rotational amount of the second head 62 increases, the pre-balk pressing pawl 62c formed on the second head 62 contacts the pre-balk pressure receiving pawl 63b formed on the third head 63 and then presses the pre-balk pressure receiving pawl 63b. Then, in accordance with an increase in rotational amount of the second head 62, the third head 63 that receives the pressing force moves in the synchronizer activating direction (toward the near side in a direction perpendicular to the sheet of FIG. 5). Thus, the fifth and sixth fork shaft 53 and the fifth and sixth shift fork 33 also move together with the third head 63, and then the third synchromesh mechanism 13 is actuated in a direction to establish sixth gear. Then, when the pre-balk is activated, the sixth-speed drive gear 9a is coupled (brought into frictional contact) to the input shaft 1 through the third synchromesh mechanism 13. That is, the input shaft 1 is coupled to the output shaft 2 through the third synchromesh mechanism 13, the sixth-speed drive gear 9a, and the sixth-speed driven gear 9b. At this time, as shown in FIG. 11C and FIG. 12C, the fifth and sixth heads 24a enter into the recess 26a formed in the interlock plate 26. This allows movement of the fifth and sixth fork shaft 53 and fifth and sixth shift fork 33.

Changes in positional relationship between the pre-balk pressing pawl 62c of the second head 62 and the pre-balk pressure receiving pawl 63b of the third head 63 in accordance with an increase in rotational amount of the second head 62 will be described in detail with reference to FIG. 10A to FIG. 12C.

In process of increase in rotational amount of the second head 62, first, the first tapered surface 62d of the pre-balk pressing pawl 62c of the second head 62 contacts the rounded surface 63d of the pre-balk pressure receiving pawl 63b of the third head 63 (see FIG. 10B). Then, as the rotational amount of the second head 62 increases, the contact position at which the rounded surface 63d contacts the first tapered surface 62d changes toward the intersection line portion 62g of both the tapered surfaces 62d and 62e. In this case, the more the contact position changes toward the intersection line portion 62g, the further the third head 63 moves in the synchronizer activating direction. In this way, while the first tapered surface 62d is in contact with the rounded surface 63d, even when the third head 63 moves in the synchronizer activating direction, the third synchromesh mechanism 13 is not activated. Thus, while the first tapered surface 62d is in contact with the rounded surface 63d, no load due to actuation of the third synchromesh mechanism 13 is generated. Therefore, the second head 62 is not pressed by that load in a direction (reverse gear shift direction) opposite to the synchronizer activating direction.

As the rotational amount of the second head 62 further increases from the state shown in FIG. 10A to FIG 10C, the second tapered surface 62e of the pre-balk pressing pawl 62c of the second head 62 contacts the rounded surface 63d of the pre-balk pressure receiving pawl 63b of the third head 63 (see FIG. 11B). That is, the rounded surface 63d runs over the intersection line portion 62g between both tapered surfaces 62d and 62e from the state shown in FIG. 10A to FIG. 10C, and then contacts the second tapered surface 62e. Then, as the rotational amount of the second head 62 increases, the contact position at which the rounded surface 63d contacts the second tapered surface 62e changes toward an intersection line portion 62h between the second tapered surface 62e and the flat surface 62f. In this case, the more the contact position changes toward the intersection line portion 62h, the further the third head 63 moves in the synchronizer activating direction. This movement of the third head 63 activates the third synchromesh mechanism 13.

In this way, while the second tapered surface 62e is in contact with the rounded surface 63d, the third synchromesh mechanism 13 is activated. When the third synchromesh mechanism 13 is activated, a load (pre-balk load) due to that activation is generated. The pre-balk load is generated from the time when the third synchromesh mechanism 13 is activated until the time when synchronization is complete. Thus, the pre-balk load is transmitted to the second head 62 through the third head 63 on the fifth and sixth fork shaft 53, so the second head 62 is pressed in a direction (reverse gear shift direction) opposite to the synchronizer activating direction. Then, the second head 62 is moved in the reverse gear shift direction to a position at which the pre-balk load applied to the second head 62 balances with the urging force of the coil spring 71 applied to the second head 62. That is, the coil spring 71 is compressed by the pre-balk load, and the second head 62 moves in the reverse gear shift direction from the initial axial position.

As the rotational amount of the second head 62 further increases from the state shown in FIG. 11A to FIG. 11C, the flat surface 62f of the pre-balk pressing pawl 62c of the second head 62 contacts the flat surface 63e of the pre-balk pressure receiving pawl 63b of the third head 63 (see FIG 12B). In this state, because the flat surfaces 62f and 63e contact each other, rotation of the second head 62 does not cause the pre-balk pressing pawl 62c to press the pre-balk pressure receiving pawl 63b. In addition, in this state, because the third synchromesh mechanism 13 is being activated, the pre-balk load is generated until completion of synchronization. Thus, the pre-balk load is transmitted to the second head 62, and the second head 62 moves in the reverse gear shift direction. On the other hand, when synchronization is complete, no pre-balk load is applied to the second head 62. Thus, the second head 62 is pressed by the urging force of the coil spring 71 in the synchronizer activating direction, and moves in the synchronizer activating direction to the initial axial position regulated by the snap ring 72. Thus, the third head 63 is pressed by the second head 62, and moves in the synchronizer activating direction. That is, after synchronization is complete, the second head 62, which is returned in the reverse gear shift direction by the pre-balk load, is moved again in the synchronizer activating direction by the urging force of the coil spring 71.

Then, at the time of a gear shift operation into the reverse gear, the vehicle is stopped, and rotation of the output shaft 2 is also stopped. Thus, even when the input shaft 1 is rotated by inertia, the above described third synchromesh mechanism 13 is actuated in a direction to establish sixth gear, and the input shaft 1 coupled to the output shaft 2 is forcibly stopped or decelerated (matched with the rotation of the output shaft 2). Thus, when the shift operation is performed to move the shift lever L to the reverse gear position REV after that, the reverse idler gear 10c may mesh with the reverse drive gear 10a in a state where the reverse drive gear 10a provided on the input shaft 1 so as to rotate integrally with the input shaft 1 is stopped or decelerated. Hence, the reverse idler gear 10c smoothly mesh with the reverse drive gear 10a and, as a result, occurrence of gear noise may be prevented.

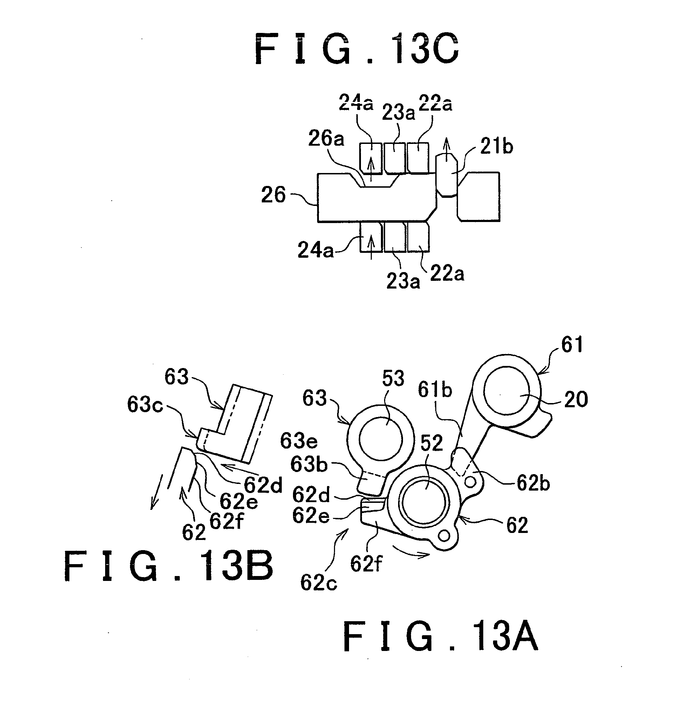

In addition, when the shift operation is performed to move the shift lever L to the reverse gear position REV in this way, the shift select shaft 20 slides in the reverse gear shift direction. Specifically, the shift select shaft 20 slides toward the far side in a direction perpendicular to the sheet of FIG. 5 and FIG 12A to FIG 12C. In accordance with this, the first head 61 also moves in the same direction. Thus, the pressing pawl 61b formed on the first head 61 axially retracts from the pressure receiving pawl 62b formed on the second head 62. That is, the pressing force applied from the pressing pawl 61b of the first head 61 to the second head 62 is released, and the second head 62 is returned to the initial rotational position (position shown in FIG. 5) by the urging force of the coil spring 65 (see FIG 5) as shown in FIG. 13A to FIG 13C. In this way, the second head 62 is returned to the initial rotational position, and the pressing force in the synchronizer activating direction applied to the third head 63 is also released. Thus, the third head 63 is also returned to the initial position, and the coupled state between the input shaft 1 and the output shaft 2 through the movement of the third synchromesh mechanism 13 is released. That is, the third synchromesh mechanism 13 is set in a neutral position, and, after that, the shift operation proceeds to move the shift lever L toward the reverse gear position REV, thus completing shifting into the reverse gear.

Next, the reverse gear release operation (operation of the shift lever L from the reverse gear position REV to the third and fourth select position P2) will be described. As described above, when the shift lever L placed at the reverse gear position REV is operated toward the reverse select position P4, the shift select shaft 20 moves in a direction opposite to the reverse gear shift direction. Specifically, the shift select shaft 20 slides toward the near side in a direction perpendicular to the sheet of FIG. 5 and FIG 14A to FIG. 14C. In accordance with this, the first head 61 also moves toward the initial axial position. As described above, the second head 62 has been already returned to the initial rotational position, the first head 61 axially contacts the second head 62. Then, the first head 61 axially moves the second head 62 (toward the near side in a direction perpendicular to the sheet of FIG. 5 and FIG 14A to FIG 14C) against the axial urging force of the coil spring 65. Specifically, the pressing pawl 61b of the first head 61 axially presses the pressure receiving pawl 62b of the second head 62 to thereby axially move the second head 62. In this case, the first head 61 applies a pressing force to the second head 62. However, because the pressing direction is the axial direction, the second head 62 does not rotate toward the third head 63. Thus, the third synchromesh mechanism 13 is not activated and is maintained in the neutral state.

When the shift lever L is operated to the reverse select position P4 and then operated toward the third and fourth select position P2 (actually, the shift lever L is returned to the third and fourth select position P2 by a spring that is connected to the shift lever L and that applies the urging force to the shift lever L toward the third and fourth select position P2), the shift select shaft 20 rotates (see the arrow in FIG. 14A) and, in accordance with this, the first head 61 also rotates toward the initial position. Then, as the shift lever L reaches the third and fourth select position P2, the shift select shaft 20 and the first head 61 return to the initial positions shown in FIG. 5 and FIG. 8A to FIG. 8C. In addition, the axial pressing force, applied from the first head 61 to the second head 62, is also released, and the second head 62 is returned to the initial axial position by the axial urging force of the coil spring 65.

As described above, in the present embodiment, the rotational force of the shift select shaft 20 is transmitted from the first head 61 through the second head 62 to the third head 63, and, when power is transmitted from the second head 62 to the third head 63, the rotational force is converted into a linear moving force in the axial direction (synchronizer activating direction) to actuate the third synchromesh mechanism 13 in a direction to establish sixth gear. Thus, the pre-balk load at the time when the gear noise preventing device works is applied from the fifth and sixth fork shaft 53 to the second head 62 in the axial direction (reverse gear shift direction); however, because the shift select shaft 20 applies the urging force to the second head 62 in the rotational direction, the pre-balk load does not directly act on the shift select shaft 20. In this case, the coil spring 71 of the urging mechanism 70 is provided on the front side of the second head 62 in the reverse gear shift direction (on the rear side in the synchronizer activating direction). Thus, the coil spring 71 contracts to be able to receive the pre-balk load. Then, it is possible to ensure a large stroke of the fifth and sixth fork shaft 53 to cause the gear noise preventing function to work (stroke for activating the third synchromesh mechanism 13). As a result, it is possible to improve reliability of the gear noise preventing function.

Here, when no coil spring 71 is provided and a stopper, or the like, fixed to the third and fourth fork shaft 52 simply receives a pre-balk load, there is the following concern. In this case, when the third synchromesh mechanism 13 is activated, axial movement of the second head 62 may be stopped at the activation position during a period until synchronization is complete, and, therefore, the select operation of the shift lever L may be stopped in midstream. This adversely influences the operation feeling of the shift lever L. In contrast, in the present embodiment, when the pre-balk load is generated, the second head 62 moves in the reverse gear shift direction, and the pre-balk load is received by the coil spring 71 provided on the third and fourth fork shaft 52. Thus, axial movement of the second head 62 is not stopped at the activation position and, therefore, occurrence of the above problem may be prevented, and the operation feeling of the shift lever L may be favorably maintained.

In addition, when a ball and a spring that press the interlock plate are provided for the shift select shaft 20 to receive a pre-balk load, there is the following concern. In this case, when the urging force of the spring is also applied, as in the case of the reverse gear shift operation, when shifting into neutral for reverse gear release (operation of the shift lever L from the reverse gear position REV to the reverse select position P4), there is a possibility that an operating load of the shift lever L at the time of the shifting into neutral may be large. That is, because the components of the gear noise preventing mechanism, such as the ball and the spring, also operate in the same way both at the time of shifting into neutral for reverse gear release and at the time of a reverse gear shift operation, there is a possibility that an operating load of the shift lever L at the time of shifting into neutral for reverse gear release may be large. This adversely influences the operation feeling of the shift lever L. In contrast, in the present embodiment, the urging force of the coil spring 71 of the urging mechanism 70 is applied to the second head 62 at the time of a reverse gear shift operation but the urging force is not applied to the second head 62 at the time of shifting into neutral for reverse gear release. As described above, at the time of shifting into neutral for reverse gear release, the second head 62 moves in the synchronizer activating direction from the initial axial position against the axial urging force of the coil spring 65. Then, because the urging force of the coil spring 71 is not applied to the second head 62, it is possible to reduce the operating load of the shift lever L and, therefore, it is possible to maintain the favorable operation feeling of the shift lever L. At this time, by appropriately setting the urging force of the coil spring 71, the maximum operating load and/or load characteristic of the shift lever L may be easily changed. Thus, the operation feeling of the shift lever L may be improved.

In addition, when the ball and the spring that press the interlock plate are provided for the shift select shaft 20 to receive a pre-balk load, there is also the following concern. In this case, when positioning of the shift select shaft 20 in the rotational direction and in the axial direction is performed only by the interlock plate and the ball, positioning accuracy deteriorates and, as a result, there is a possibility that variations in stroke (stroke for activating the synchronizer) of the pre-balk fork shaft may occur. For this reason, the stroke of the pre-balk fork shaft becomes excessive, and, therefore, the sleeve and gear piece. (transmission gear) of the synchronizer may undesirably mesh with each other at the time when the gear noise preventing device works.

In contrast, in the present embodiment, because the snap ring 72 that restricts the stroke of the second head 62 by the coil spring 71 in the synchronizer activating direction is provided, there is no possibility that the stroke for activating the third synchromesh mechanism 13 becomes excessive. In addition, at the time of the select operation, as described above, the flat surface 62f of the pre-balk pressing pawl 62c of the second head 62 finally presses the third head 63. Thus, it is possible to accurately regulate the stroke for activating the third synchromesh mechanism 13. By so doing, when the gear noise preventing device works, it is possible to reliably avoid a situation in which the sleeve 13a of the third synchromesh mechanism 13 meshes with the gear piece of the sixth-speed drive gear 9a. Thus, it is possible to improve reliability of the gear noise preventing function.

In addition, because the pre-balk pressing pawl 62c of the second head 62 has the two-step tapered surfaces 62d and 62e, the following advantageous effects may be obtained. The first tapered surface 62d has a relatively large inclination angle θ1 with respect to the flat surface 62f. Thus, even when there is a manufacturing tolerance, a positioning error, or the like, the first tapered surface 62d is able to reliably press the pressure receiving portion 63c of the third head 63 at the time when the second head 62 rotates. Note that as described above, while the first tapered surface 62d is in contact with the pressure receiving portion 63c, no pre-balk load is generated; therefore, even when the inclination angle θ2 of the first tapered surface 62d is relatively large, the influence on the operating load of the shift lever L may be suppressed to a lesser degree.

The second tapered surface 62e has a relatively small inclination angle θ2 with respect to the flat surface 62f, and is able to suppress an increase in operating load of the shift lever L. As described above, while the second tapered surface 62e is in contact with the pressure receiving portion 63c, the third synchromesh mechanism 13 is activated, and a pre-balk load is generated. Thus, when no second tapered surface 62e is provided (when only the first tapered surface 62d is provided), the pre-balk load largely acts on the second head 62 in the rotational direction and, therefore, the operating load of the shift lever L increases. In the present embodiment, because the inclination angle θ2 of the second tapered surface 62e is smaller than the inclination angle θ1 of the first tapered surface 62d, it is possible to suppress the component of the pre-balk load in the rotational direction, applied to the second head 62, to a lesser degree. Thus, the operating load of the shift lever L may be reduced.

In addition, because the thrust washer 74 made of polytetrafluoroethylene (PTFE) having a low frictional coefficient is provided adjacent to the second head 62 on the rear side in the synchronizer activating direction, that is, on the front side of the second head 62 in a direction in which the pre-balk load is applied, sliding resistance at the time when the second head 62 rotates is reduced. Thus, even when the pre-balk load acts on the second head 62, the rotation of the second head 62 may be smoothly performed and, therefore, the operating load of the shift lever L may be further reduced. Note that a member made of a material other than polytetrafluoroethylene (PTFE) may be used as long as the member has a low frictional coefficient. In addition, instead of the thrust washer 74, a thrust bearing, such as a thrust needle bearing, may be provided as the member having a low frictional coefficient.

The above embodiment is described in the case where the invention is applied to the six-forward-speed and one-reverse-speed synchromesh manual transmission mounted on the FF vehicle. The aspects of the invention are not limited to it. Instead, the aspects of the invention may be applied to a manual transmission mounted on another type of vehicle, such as a front-engine rear-drive (FR) vehicle. In addition, the aspects of the invention may also be applied to a transmission having different number of speeds (for example, five-forward-speed and one-reverse-speed transmission). Furthermore, the aspects of the invention may also be applied to a transmission (so-called automatic manual transmission (AMT)) that includes an actuator in synchronization with a driver's shifting operation and that performs a gear shift operation by the actuator.

In addition, in the above embodiment, the description refers to the case in which the gear noise preventing device is constructed among the shift select shaft 20, the third and fourth fork shaft 52 and the fifth and sixth fork shaft 53. Instead, the gear noise preventing mechanism may be constructed using other fork shafts (for example, the first and second fork shaft 51 and the third and fourth fork shaft 52). In addition, the gear noise preventing mechanism may be constructed using all the fork shafts 51, 52, and 53. That is, a similar head as described above is also provided on the first and second fork shaft 51, rotational force of the shift select shaft 20 is transmitted as rotational forces of the first head 61, head provided on the first and second fork shaft 51, and second head 62 in order, and then the rotational force of the second head 62 is transmitted to the third head 63 as a linear moving force in the axial direction of the third head 63. That is, an intermediate head member according to the aspects of the invention is formed of a plurality of heads.

## Claims

1. A manual transmission comprising a gear noise preventing device, said manual transmission including
a shift select shaft (20) that, during a gear shift operation, is adapted to perform a select operation in which the shift select shaft (20) rotates about its axis and a shift operation in which the shift select shaft (20) axially moves;
a forward-gear fork shaft (53) that, at the time of shifting into forward gear, is adapted to be coupled to the shift select shaft (20) with the select operation of the shift select shaft (20) to a predetermined forward-gear select position and that is adapted to axially move with the shift operation of the shift select shaft (20) to activate a synchronizer (13) while performing a gear shift operation into predetermined forward gear; and
a reverse-gear shift member (28) that, at the time of shifting into reverse gear, is adapted to be coupled to the shift select shaft (20) with the select operation of the shift select shaft (20) to a reverse-gear select position and that is adapted to perform a gear shift operation into the reverse gear with the shift operation of the shift select shaft (20), said gear noise preventing device comprising:
a first head member (61) that is adapted to rotate together with the shift select shaft (20) when the shift select shaft (20) performs the select operation toward the reverse gear;
at least one intermediate head member (62) that is adapted to rotate by receiving rotational force of the first head member (61) that is adapted to rotate together with the shift select shaft (20); and
a pre-balk head member (63) that is provided on the forward-gear fork shaft (53) and that is adapted to receive rotational force of the at least one intermediate head member (62) to axially move the forward-gear fork shaft (53) to thereby activate the synchronizer (13) during a period when the shift select shaft (20) is performing the select operation toward the reverse gear,
**characterized in that**
the at least one intermediate head member (62) has a flat surface (62f) that is perpendicular to the direction in which the forward-gear fork shaft (53) is adapted to move and two inclined surfaces (62d, 62e) that are inclined at different angles relative to the flat surface (62f) at a portion at which, when the forward-gear fork shaft (53) is moved by rotational force applied from the at least one intermediate head member (62), the at least one intermediate head member (62) contacts the pre-balk head member (63).

2. The manual transmission according to claim 1, **characterized in that** one of the two inclined surfaces (62e) is adapted to regulate an activation position at which the synchronizer (13) is activated, and the other inclined surface (62d) is adapted to regulate an activation position at which the forward-gear fork shaft (53) is activated.

3. The manual transmission according to claim 1 or 2, **characterized in that** angles of the two inclined surfaces (62d, 62e) are set so that, when the rotational force is applied from the at least one intermediate head member (62) to the pre-balk head member (63) to axially move the forward-gear fork shaft (53), the synchronizer (13) is not activated at the time when the boundary between the two inclined surfaces (62d, 62e) contacts the pre-balk head member (63).

4. The manual transmission according to any one of claims 1 to 3, **characterized in that** one of the two inclined surfaces (62d, 62e) is formed continuously to the flat surface (62f) and inclined at an angle smaller than 45 degrees with respect to the flat surface (62f).

5. The manual transmission according to any one of claims 1 through 4, **characterized in that** a member (74) having a low frictional coefficient is provided adjacent to the at least one intermediate head member (62) and arranged on a rear side of the at least one intermediate head member (62) in the direction in which the forward-gear fork shaft (53) is adapted to be moved by the rotational force applied from the at least one intermediate head member (62).

6. The manual transmission according to claim 5, **characterized in that** the member (74) having a low frictional coefficient is one of a washer or a thrust bearing, which is made of polytetrafluoroethylene.

7. The manual transmission according to any one of claims 1 to 6, **characterized in that** said gear noise preventing device further comprises
an urging member (71) that is adapted to urge the at least one intermediate head member (62) in a direction that coincides with a direction in which the forward-gear fork shaft (53) is adapted to be moved by the rotational force applied from the at least one intermediate head member (62); and
a restricting member (72) that is adapted to restrict a stroke by which the at least one intermediate head member (62) is adapted to move in the direction in which the urging member (71) is adapted to urge the at least one intermediate head member (62).

8. The manual transmission according to claim 7, **characterized in that**
the first head member (61) is provided on the shift select shaft (20),
the at least one intermediate head member (62) is provided on an intermediate shaft (52) other than the shift select shaft (20) or the forward-gear fork shaft (53), and
the urging member (71) is provided on the intermediate shaft (52) so that, when the rotational force is applied from the at least one intermediate head member (62) to the pre-balk head member (63) to axially move the forward-gear fork shaft (53), the at least one intermediate head member (62) is adapted to receive a load that is generated as the synchronizer (13) is activated.

9. The manual transmission according to claim 7 or 8, **characterized in that**
the urging member (71) is an elastic body that is provided in a compressed state on a rear side of the at least one intermediate head member (62) in the direction in which the forward-gear fork shaft (53) is adapted to be moved by the rotational force applied from the at least one intermediate head member (62), and
the restricting member (72) is a stopper that is provided on the intermediate shaft (52).

## Patentansprüche

1. Schaltgetriebe mit einer Ganggeräuschverhinderungsvorrichtung, wobei das Schaltgetriebe aufweist
eine Schaltauswahlwelle (20), die, während eines Gangschaltbetriebs, angepasst ist, um eine Auswahlbetätigung, in der die Schaltauswahlwelle (20) um ihre Achse dreht, und eine Schaltbetätigung durchzuführen, in der sich die Schaltauswahlwelle (20) axial bewegt;
eine Vorwärtsganggabelwelle (53), die, zu der Zeit des Schaltens in einen Vorwärtsgang, angepasst ist, um mit der Schaltauswahlwelle (20) mit der Auswahlbetätigung der Schaltauswahlwelle (20) zu einer vorbestimmten Vorwärtsgangauswahlposition gekoppelt zu werden, und die angepasst ist, um sich mit der Schaltbetätigung der Schaltauswahlwelle (20) axial zu bewegen, um eine Synchronisationseinrichtung (13) zu aktivieren, während eine Gangschaltbetätigung in einen vorbestimmten Vorwärtsgang durchgeführt wird; und
ein Rückwärtsgangschaltbauteil (28), das, zu der Zeit des Schaltens in einen Rückwärtsgang, angepasst ist, um mit der Schaltauswahlwelle (20) mit der Auswahlbetätigung der Schaltauswahlwelle (20) zu einer Rückwärtsgangauswahlposition gekoppelt zu werden, und die angepasst ist, um eine Gangschaltbetätigung in den Rückwärtsgang mit der Schaltbetätigung der Schaltauswahlwelle (20) durchzuführen, wobei die Ganggeräuschverhinderungsvorrichtung Folgendes aufweist:
ein erstes Kopfbauteil (61), das angepasst ist, um zusammen mit der Schaltauswahlwelle (20) zu drehen, wenn die Schaltauswahlwelle (20) die Auswahlbetätigung zu dem Rückwärtsgang hin durchführt;
wenigstens ein Zwischenkopfbauteil (62), das angepasst ist, um durch Aufnahme einer Drehkraft des ersten Kopfbauteils (61) zu drehen, das angepasst ist, um zusammen mit der Schaltauswahlwelle (20) zu drehen; und
ein Vorbalkenkopfbauteil (63), das an der Vorwärtsganggabelwelle (53) vorgesehen ist und das angepasst ist, um eine Drehkraft des wenigstens einen Zwischenkopfbauteils (62) aufzunehmen, um die Vorwärtsganggabelwelle (53) axial zu bewegen, um **dadurch** die Synchronisationseinrichtung (13) während einer Zeitspanne zu betätigen, wenn die Schaltauswahlwelle (20) die Auswahlbetätigung zu dem Rückwärtsgang durchführt,
**dadurch gekennzeichnet, dass**
das wenigstens eine Zwischenkopfbauteil (62) eine flache Fläche (62f), die senkrecht zu der Richtung ist, in der die Vorwärtsganggabelwelle (53) sich bewegen kann, und zwei geneigte Flächen (62d, 62e), die in verschiedenen Winkeln relativ zu der flachen Fläche (62f) geneigt sind, an einem Abschnitt hat, an dem, wenn die Vorwärtsganggabelwelle (53) durch eine Drehkraft bewegt wird, die von dem wenigstens einen Zwischenkopfbauteil (62) aufgebracht wird, das wenigstens eine Zwischenkopfbauteil (62) das Vorbalkenkopfbauteil (63) berührt.

2. Schaltgetriebe nach Anspruch 1, **dadurch gekennzeichnet, dass** eine der zwei geneigten Flächen (62e) angepasst ist, um eine Aktivierungsposition zu regulieren, bei der die Synchronisationseinrichtung (13) aktiviert wird, und die andere geneigte Fläche (62d) angepasst ist, um eine Aktivierungsposition zu regulieren, bei der die Vorwärtsganggabelwelle (53) aktiviert wird.

3. Schaltgetriebe nach Anspruch 1 oder 2, **dadurch gekennzeichnet, dass** Winkel der zwei geneigten Flächen (62d, 62e) so festgelegt sind, dass, wenn die Drehkraft von dem wenigstens einen Zwischenkopfbauteil (62) auf das Vorbalkenkopfbauteil (63) aufgebracht wird, um die Vorwärtsganggabelwelle (53) axial zu bewegen, die Synchronisationseinrichtung (13) nicht zu der Zeit aktiviert wird, wenn die Grenze zwischen den zwei geneigten Flächen (62d, 62e) das Vorbalkenkopfbauteil (63) berührt.

4. Schaltgetriebe nach einem der Ansprüche 1 bis 3, **dadurch gekennzeichnet, dass** eine der zwei geneigten Flächen (62d, 62e) fortlaufend zu der flachen Fläche (62f) ausgebildet ist und in einem Winkel kleiner als 45° in Bezug auf die flache Fläche (62f) geneigt ist.

5. Schaltgetriebe nach einem der Ansprüche 1 bis 4, **dadurch gekennzeichnet, dass** ein Bauteil (74) mit einem niedrigen Reibungskoeffizienten benachbart zu dem wenigstens einen Zwischenkopfbauteil (62) vorgesehen ist und an einer Rückseite des wenigstens einen Zwischenkopfbauteils (62) in der Richtung angeordnet ist, in der die Vorwärtsganggabelwelle (53) angepasst ist, um durch die Drehkraft bewegt zu werden, die von dem wenigstens einen Zwischenkopfbauteil (62) aufgebracht wird.

6. Schaltgetriebe nach Anspruch 5, **dadurch gekennzeichnet, dass** das Bauteil (74) mit einem niedrigen Reibungskoeffizienten eines von einer Distanzscheibe oder einem Drucklager ist, die/das aus Polytetrafluorethylen hergestellt ist.

7. Schaltgetriebe nach einem der Ansprüche 1 bis 6, **dadurch gekennzeichnet, dass** die Ganggeräuschverhinderungsvorrichtung des Weiteren aufweist
ein Drängbauteil (71), das angepasst ist, um das wenigstens eine Zwischenkopfbauteil (62) in eine Richtung zu drängen, die mit einer Richtung übereinstimmt, in der die Vorwärtsganggabelwelle (53) angepasst ist, um durch die Drehkraft bewegt zu werden, die von dem wenigstens einem Zwischenkopfbauteil (62) aufgebracht wird; und
ein Beschränkungsbauteil (72), das angepasst ist, um einen Hub zu beschränken, um den das wenigstens eine Zwischenkopfbauteil (62) angepasst ist, sich in der Richtung zu bewegen, in der das Drängbauteil (71) angepasst ist, um das wenigstens eine Zwischenkopfbauteil (62) zu drängen.

8. Schaltgetriebe nach Anspruch 7, **dadurch gekennzeichnet, dass**
das erste Kopfbauteil (61) an der Schaltauswahlwelle (20) vorgesehen ist,
das wenigstens eine Zwischenkopfbauteil (62) an einer Zwischenwelle (52) vorgesehen ist, die anders als die Schaltauswahlwelle (20) oder die Vorwärtsganggabelwelle (53) ist, und
das Drängbauteil (71) an der Zwischenwelle (52) so vorgesehen ist, dass, wenn die Drehkraft von dem wenigstens einen Zwischenkopfbauteil (62) auf das Vorbalkenkopfbauteil (63) aufgebracht wird, um die Vorwärtsganggabelwelle (53) axial zu bewegen, das wenigstens eine Zwischenkopfbauteil (62) angepasst ist, um eine Last aufzunehmen, die erzeugt wird, wenn die Synchronisationseinrichtung (13) aktiviert wird.

9. Schaltgetriebe nach Anspruch 7 oder 8, **dadurch gekennzeichnet, dass**
das Drängbauteil (71) ein elastischer Körper ist, der in einem komprimierten Zustand an einer Rückseite des wenigstens einen Zwischenkopfbauteils (62) in der Richtung vorgesehen ist, in der die Vorwärtsganggabelwelle (53) angepasst ist, um durch die Drehkraft bewegt zu werden, die von dem wenigstens einen Zwischenkopfbauteil (62) aufgebracht wird, und
das Beschränkungsbauteil (72) ein Anschlag ist, der an der Zwischenwelle (52) vorgesehen ist.

## Revendications

1. Transmission manuelle comportant un dispositif de prévention de bruit d'engrenage, ladite transmission manuelle comprenant
un arbre de sélection de changement de vitesse (20) qui, pendant une opération de changement de vitesse, est prévu pour effectuer une opération de sélection dans laquelle l'arbre de sélection de changement de vitesse (20) tourne autour de son axe et une opération de changement de vitesse dans laquelle l'arbre de sélection de changement de vitesse (20) se déplace axialement ;
un arbre de fourchette de marche avant (53) qui, au moment du changement de vitesse en marche avant, est prévu pour être relié à l'arbre de sélection de changement de vitesse (20) avec l'opération de sélection de l'arbre de sélection de changement de vitesse (20) dans une position de sélection de marche avant prédéterminée et qui est prévu pour se déplacer axialement avec l'opération de changement de vitesse de l'arbre de sélection de changement de vitesse (20) afin d'activer un synchroniseur (13) tout en réalisant une opération de changement de vitesse dans en marche avant prédéterminée ; et
un élément de changement de vitesse en marche arrière (28) qui, au moment du changement de vitesse en marche arrière, est prévu pour être relié à l'arbre de sélection de changement de vitesse (20) avec l'opération de sélection de l'arbre de sélection de changement de vitesse (20) dans une position de sélection de marche arrière et qui est prévu pour effectuer une opération de changement de vitesse en marche arrière avec l'opération de changement de vitesse de l'arbre de sélection de changement de vitesse (20), ledit dispositif de prévention de bruit d'engrenage comportant :
un premier élément de tête (61) qui est prévu pour tourner avec l'arbre de sélection de changement de vitesse (20) quand l'arbre de sélection de changement de vitesse (20) effectue l'opération de sélection vers la marche arrière ;
au moins un élément de tête intermédiaire (62) qui est prévu pour tourner en recevant une force de rotation du premier élément de tête (61) qui est prévu pour tourner avec l'arbre de sélection de changement de vitesse (20) ; et
un élément principal de pré-charge (63) qui prévu sur l'arbre de fourchette de marche avant (53) et qui est prévu pour recevoir une force de rotation du au moins un élément de tête intermédiaire (62) afin de déplacer axialement l'arbre de fourchette de marche avant (53) de façon à activer ainsi le synchroniseur (13) au cours d'une période où l'arbre de sélection de changement de vitesse (20) réalise l'opération de sélection vers la marche arrière,
**caractérisée en ce que**
le au moins un élément de tête intermédiaire (62) a une surface plate (62f) qui est perpendiculaire à la direction dans laquelle l'arbre de fourchette de marche avant (53) est prévu pour se déplacer et deux surfaces inclinées (62d, 62e) qui sont inclinées avec des angles différents par rapport à la surface plate (62f) au niveau d'une partie où, quand l'arbre de fourchette de marche avant (53) est déplacé par la force de rotation appliquée à partir du au moins un élément de tête intermédiaire (62), le au moins un élément de tête intermédiaire (62) entre en contact avec l'élément de tête de pré-charge (63).

2. Transmission manuelle selon la revendication 1, **caractérisée en ce qu'**une des deux surfaces inclinées (62e) est prévue pour réguler une position d'activation dans laquelle le synchroniseur (13) est activé, et l'autre surface inclinée (62d) est prévue pour réguler une position d'activation dans laquelle l'arbre de fourchette de marche avant (53) est activé.

3. Transmission manuelle selon la revendication 1 ou 2, **caractérisée en ce que** des angles des deux surfaces inclinées (62d, 62e) sont établis de telle sorte que, quand la force de rotation est appliquée par le au moins un élément de tête intermédiaire (62) sur l'élément de tête de pré-charge (63) afin de déplacer axialement l'arbre de fourchette de marche avant (53), le synchroniseur (13) n'est pas activé au moment où la limite entre les deux surfaces inclinées (62d, 62e) entre en contact avec l'élément de tête de pré-charge (63).

4. Transmission manuelle selon l'une quelconque des revendications 1 à 3, **caractérisée en ce que** l'une des deux surfaces inclinées (62d, 62e) est formée de manière continue sur la surface plate (62f) et inclinée avec un angle inférieur à 45 degrés par rapport à la surface plate (62f) .

5. Transmission manuelle selon l'une quelconque des revendications 1 à 4, **caractérisé en ce qu'**un élément (74) ayant un faible coefficient de friction est prévu de façon adjacente au au moins un élément de tête intermédiaire (62) et disposé sur un côté arrière du au moins un élément de tête intermédiaire (62) dans la direction dans laquelle l'arbre de fourchette de marche avant (53) est prévu pour être déplacé par la force de rotation appliquée à partir du au moins un élément de tête intermédiaire (62).

6. Transmission manuelle selon la revendication 5, **caractérisée en ce que** l'élément (74) ayant un faible coefficient de friction est l'un d'une rondelle ou d'un palier de butée, qui est en polytétrafluoroéthylène.

7. Transmission manuelle selon l'une quelconque des revendications 1 à 6, **caractérisée en ce que** ledit dispositif de prévention de bruit d'engrenage comporte en outre
un élément de poussée (71) qui est prévu pour pousser le au moins un élément de tête intermédiaire (62) dans une direction qui coïncide avec une direction dans laquelle l'arbre de fourchette de marche avant (53) est prévu pour être déplacé par la force de rotation appliquée à partir du au moins un élément de tête intermédiaire (62) ; et
un élément de limitation (72) qui est prévu pour limiter une course sur laquelle le au moins un élément de tête intermédiaire (62) est prévu pour se déplacer dans la direction dans laquelle l'élément de poussée (71) est prévu pour pousser le au moins un élément de tête intermédiaire (62).

8. Transmission manuelle selon la revendication 7, **caractérisée en ce que**
le premier élément de tête (61) est prévu sur l'arbre de sélection de changement de vitesse (20),
le au moins un élément de tête intermédiaire (62) est prévu sur un arbre intermédiaire (52) autre que l'arbre de sélection de changement de vitesse (20) ou l'arbre de fourchette de marche avant (53), et
l'élément de poussée (71) est prévu sur l'arbre intermédiaire (52) de telle sorte que, quand la force de rotation est appliquée à partir du au moins un élément de tête intermédiaire (62) sur l'élément de tête de pré-charge (63) afin de déplacer axialement l'arbre de fourchette de marche avant (53), le au moins un élément de tête intermédiaire (62) est prévu pour recevoir une charge qui est générée lorsque le synchroniseur (13) est activé.

9. Transmission manuelle selon la revendication 7 ou 8, **caractérisé en ce que**
l'élément de poussée (71) est un corps élastique qui est prévu dans un état comprimé sur un côté arrière du au moins un élément de tête intermédiaire (62) dans la direction dans laquelle l'arbre de fourchette de marche avant (53) est prévu pour être déplacé par la force de rotation appliquée à partir du au moins un élément de tête intermédiaire (62), et
l'élément de limitation (72) est une butée qui est prévue sur l'arbre intermédiaire (52).
